# EUROPEAN PATENT SPECIFICATION

(11) **EP 4 302 267 B1**
(45) Date of publication and mention of the grant of the patent: **06.05.2026**
(21) Application number: 21714606.7
(22) Date of filing: 03.03.2021
(51) Int. Cl.: G06T 7/593

(54) **REAL-TIME ACTIVE STEREO MATCHING**
AKTIVE ECHTZEIT-STEREOANPASSUNG
MISE EN CORRESPONDANCE STÉRÉO ACTIVE EN TEMPS RÉEL

(43) Date of publication of application: 10.01.2024
(73) Proprietor: Google LLC, Mountain View, CA 94043 (US)
(72) Inventor: NOVER, Harris, Mountain View, California 94043 (US); ACHAR, Supreeth, Mountain View, California 94043 (US); PRABHU, Kira, Mountain View, California 94043 (US); BHATAWADEKAR, Vineet, Mountain View, California 94043 (US)
(74) Representative: Maikowski & Ninnemann Patentanwälte Partnerschaft mbB
(86) International application number: PCT/US2021/070220
(87) International publication number: WO 2022/186890

(56) References cited:
- US-A1- 2020 027 220
- NOVER HARRIS ET AL: "ESPReSSo: Efficient Slanted PatchMatch for Real-Time Spacetime Stereo", 2018 INTERNATIONAL CONFERENCE ON 3D VISION (3DV), IEEE, 5 September 2018 (2018-09-05), pages 578 - 586, XP033420136, DOI: 10.1109/3DV.2018.00072
- MICHAEL BLEYER ET AL: "PatchMatch Stereo - Stereo Matching with Slanted Support Windows", PROCEDINGS OF THE BRITISH MACHINE VISION CONFERENCE 2011, 1 January 2011 (2011-01-01), pages 14.1 - 14.11, XP055114350, ISBN: 978-1-90-172543-8, DOI: 10.5244/C.25.14

## Description

### TECHNICAL FIELD

Embodiments relate to a real-time active stereo system to increase the resolution and/or accuracy of depth maps.

### BACKGROUND

Stereo matching, also known as stereo vision or disparity mapping, is a process to find the depth of a scene and involves capturing two images from different viewpoints and matching those images to locate disparities (e.g., differences in positions) of elements in the scene. Active stereo matching is a process that uses structured light to simplify the stereo matching problem. However, conventional active stereo matching techniques are computationally expensive, and the resolution and accuracy of these conventional systems may not meet the needs of applications requiring real-time processing and/or applications requiring a higher level of detail and accuracy.

The article ESPReSSo: Efficient Slanted Patch Match for Real-time Spacetime Stereo by H. Nover, S. Achar, and D.B. Goldman, 2018 International Conference on 3D Vision (3DV), IEEE, p. 578 - 586, relates to a real-time implementation of spacetime stereo by a local stereo reconstruction algorithm that precomputes subpixel-shifted binary descriptors, then iteratively samples them along slanted disparity plane hypotheses, applying an edge-aware filter for spatial cost aggregation. Plane hypotheses are shared within rectangular tiles, but every pixel selects a different winner from among these candidates. US 2020/0027220 A1 describes a consistent belief propagation system including a disparity map buffer that provides a disparity map of a previous time and a belief propagation unit that generates an energy function according to a first image of a present time, a second image of the present time, a first image of a previous time and the disparity map of the previous time. A disparity generating unit generates a disparity map of the present time according to the energy function.

### SUMMARY

According to an aspect, a real-time active stereo system includes the features of claim 1.

According to another aspect, a method and a computer-readable medium are provided that include the features of claim 8 and claim 14, respectively.

According to yet another aspect, further embodiments of the invention are indicated in the dependent claims.

### . BRIEF DESCRIPTION OF THE DRAWINGS

FIG. 1A illustrates a real-time active stereo system according to an aspect.
FIG. 1B illustrates an example of stereo image data received by a depth sensing computing system of the real-time active stereo system according to an aspect.
FIG. 1C illustrates an example of matching costs according to an aspect.
FIG. 1D illustrates a graphical representation of the computation of descriptors according to an aspect.
FIG. 1E illustrates a graphical representation of evaluating plane hypotheses for a group of pixels according to an aspect.
FIG. 1F illustrates sub-steps of a plane evaluation loop executable by a local stereo reconstruction algorithm of the real-time active stereo system according to an aspect.
FIG. 1G illustrates a timing diagram for the stereo images in a repeating pattern-pattern-guide sequence according to an aspect.
FIG. 2A illustrates a comparison graph for comparing pixels according to an aspect.
FIG. 2B illustrates a descriptor generator for reducing the amount of redundant information in a descriptor according to an aspect.
FIG. 3 illustrates a flowchart depicting example operations of generating a depth map using descriptors generated by the descriptor generator according to an aspect.
FIG. 4 illustrates a descriptor generator for generating reliability data according to an aspect.
FIG. 5 illustrates a flowchart depicting example operations of generating a depth map in which matching costs are updated with the reliability data according to an aspect.
FIG. 6A illustrates a stability module for increasing the stability of depth maps according to an aspect.
FIG. 6B illustrates an example of the stability module for generating a stability penalty according to an aspect.
FIG. 6C illustrates an intensity function of the stability module according to an aspect.
FIG. 6D illustrates a disparity function of the stability module according to an aspect.
FIG. 7 illustrates a flowchart depicting example operations of generating a depth map in which matching costs are updated with a stability penalty according to an aspect.
FIG. 8 illustrates a confidence weight generator for generating a confidence weight using stereo internal data according to an aspect.
FIG. 9 illustrates a flowchart depicting example operations of generating a confidence weight for each pixel's stereo depth estimate according to an aspect.
FIG. 10 shows an example of a computer device and a mobile computer device according to an aspect.
FIG. 11 illustrates a three-dimensional telepresence system according to an aspect.
FIG. 12 illustrates, in block form, the three-dimensional telepresence system for conducting three-dimensional video conferencing between two users according to an aspect.

### DETAILED DESCRIPTION

This disclosure relates to a real-time active stereo system configured to capture stereo image data (e.g., stereo images across a number of temporal exposures) using a pair of stereo cameras (e.g., a reference stereo camera and a secondary stereo camera) and to generate a depth map (e.g., a disparity map or depth image) based on the stereo image data in which the value (e.g., disparity value) at each pixel is how far along the relevant ray the closest surface is located. When a pixel in the reference stereo camera can be matched to a pixel in the secondary stereo camera, the real-time active stereo system can triangulate the associated rays to recover the depth of the surface at that pixel.

Pixel values may be compared directly to determine if two pixels match. However, the real-time active stereo system uses descriptors to determine if two pixels match. For example, the real-time active stereo system may compute reference descriptors (e.g., from the reference images captured from the reference stereo camera) and secondary descriptors (e.g., from the secondary images captured from the secondary stereo camera). A descriptor (e.g., a binary descriptor) may describe the neighborhood of a particular pixel, which may be more robust when matching between images (as compared to directly comparing pixel values).

A descriptor may describe a neighborhood of a pixel. In some examples, the descriptor may include pixel comparison information. The pixel comparison information may include a plurality of comparison values. A comparison value (e.g., zero or one) may include information that reflects the results of comparing one pixel to another pixel in image data. In some examples, a descriptor may include pixel comparison information over a spacetime window. In some examples, the spacetime window has a spatial extent of a predetermined size and a temporal extent of a predetermined size. In some examples, the spatial extent is within a range of 2 x 2 pixels to 8 x 8 pixels and the temporal extent is within a range of 2 to 6 temporal windows (e.g., 2 to 6 temporally-spaced images). A descriptor may include a set of binary values, where each value represents a result of a pixel comparison. A pixel comparison may be the result of comparing the intensity of a first pixel with the intensity of a second pixel in a same image portion (e.g., the first pixel and the second pixel are in the same image) or across different image portions captured at different times (e.g., the first pixel is in a first image portion captured at time A, the second pixel is in a second image portion captured at time B). If in a given comparison, the first pixel has a pixel value that is larger than the pixel value of the second pixel, a first value (e.g., one) is recorded in the respective bit position, otherwise a second value (e.g., zero) may be recorded. If the descriptor is a 32-bit descriptor, 32 pairs of pixels are selected, and each comparison results in a bit value.

The real-time active stereo system may divide the stereo image data into groups of pixels (e.g., regions or tiles of a predetermined size), evaluate a plurality of plane hypotheses (e.g., slanted plane hypotheses) for each of the groups using the descriptors, and update the disparity values for the depth maps based on the results of the evaluation. In some examples, the evaluation includes computing matching costs (e.g., costs of disagreement (also referred as costs)) between the descriptors. In some examples, the matching costs (e.g., the raw costs) are filtered using an edge-aware filter to obtain filtered matching costs such that the plane (e.g., the plane hypothesis) with the lowest filtered matching cost for a subset of pixels within the group of pixels (or a filtered matching cost below a threshold level) is selected for that subset of pixels. In other words, the real-time active stereo system may assign to each pixel the depth coming from the plane hypothesis that yielded the lowest filtered matching cost. In some examples, the matching costs are computed based on the number of bits that differ within two descriptors (e.g., Hamming distance).

The real-time active stereo system may include a descriptor generator that can reduce the amount of redundant information included within a particular descriptor, which can incur by the presence of cycles in a comparison graph. For example, the descriptor generator may generate a descriptor that increases the information content of the descriptor by strategically sampling pixels to produce comparisons that minimize or avoid cycles in a comparison graph. In some examples, instead of selecting the pixels for the comparisons in a random manner (or semi-random manner), the descriptor generator may compute a descriptor by alternatively 1) selecting pixels from the same time slice and 2) selecting pixels from different time slices. The descriptor generator may repeat this process until all the pixels in the spacetime window have been selected or until the descriptor reaches its maximum number of bits. Also, the descriptor generator may avoid re-selecting a pixel that has already been used in a comparison until all the pixels in the spacetime window have been selected. In some examples, if all pixels in the spacetime window have been selected (and there are still comparisons to be made), the descriptor generator may select pixels in a manner that the graph structure of the pixels have a cycle length that is greater than a threshold level and/or greater than a cycle length of another possible arrangement.

As indicated above, a descriptor may be generated by comparing pixel intensities in a spacetime window, but some comparisons may be more usual and reliable than other comparisons. For example, if the magnitude of a comparison between a first pixel and a second pixel is relatively large, the comparison may be considered more reliable. If the difference (e.g., absolute difference) is relatively small, the comparison may be considered less reliable.

The real-time active stereo system may include a descriptor generator that can generate reliability data associated with the descriptors based on intensity differences between the pixel values. Then, the real-time active stereo system can adjust the matching costs (e.g., raw matching costs) with the reliability data during the plane evaluation loop. In some examples, the reliability data includes a reliable mask and an unreliable mask. In computer science, a mask or bitmask is data that is used for bitwise operations. The reliable mask may include information that indicates the reliability of the comparison values of a descriptor. The unreliable mask may include information that indicates the unreliability of the comparison values of a descriptor. The reliable mask and the unreliable mask may have the same size as the descriptor and each bit position in the descriptor has a corresponding bit in the reliable and unreliable masks. When computing the descriptor, if the magnitude of a comparison exceeds a reliable threshold, the descriptor generator may generate a first reliable value (e.g., one) in the respective bit position in the reliable mask. If the magnitude of a comparison is less than an unreliable threshold, the descriptor generator may generate a first reliable value (e.g., one) in the respective bit position in the unreliable mask. The reliable mask and the unreliable mask are used to weight the comparison during the cost computation.

Instead of counting the positions at which the reference and secondary descriptor differ (e.g., the Hamming distance), the real-time active stereo system determines whether the bit position was marked as reliable or unreliable using the reliable mask and the unreliable mask. In some examples, the real-time active stereo system computes an exclusive OR (XOR) operation on the reference and second descriptors, and then executes a bitwise AND operation with the reliable mask and the unreliable mask (which may be followed by a population count). In some examples, the real-time active stereo system counts the reliable comparisons twice, discards the unreliable comparisons, and counts comparisons that are neither reliable nor unreliable once.

The real-time active stereo system may include a stability module that can increase the stability of generating depth maps by reducing temporal flicker. The stability penalty may include information that is used to offset (e.g., adjust) the matching costs. The stability penalty may include information that is used to offset (e.g., adjust) the matching costs to account for temporal flicker. In some examples, the stability penalty is added to the matching costs.

The stability module may compute a stability penalty based on pixel change information and disparity change information. The pixel change information may represent the amount of pixel change (e.g., how much the pixels have changed) between the image data (e.g., the reference images) that was used to compute the last depth map (e.g., depth frame) and the image data (e.g., the reference images) that are used to compute the current depth map (e.g., current frame). For example, the stability module may compute the pixel change information by determining the amount of the pixel intensity change between the inputs (e.g., reference images) for the current depth map and the inputs (e.g., reference images) for the previous depth map. The disparity change information may represent the amount of disparity change and the previous depth map and the current depth map. For example, the stability module may compute the disparity change information by determining the amount of disparity change between the disparity for the previous depth map and the proposed disparity for the current depth map. The stability module may compute the stability penalty using the pixel intensity information and the disparity change information. For example, the stability module may use one or more functions inputted with the pixel intensity information and the disparity change information to derive the stability penalty. The real-time active stereo system may update the matching costs with the stability penalty during the plane evaluation loop.

The pixel change information may include a pixel change value. The pixel change value represents a difference between a pixel value of a pixel in a reference image or a secondary image for a current depth map and a pixel value of the pixel in a reference image or a secondary image for a previous depth map. The disparity change information includes a disparity change value. The disparity change value may represent a difference between a proposed disparity of a pixel for the current depth map and a disparity of the pixel for the previous depth map. The stability module may compute an intensity multiplier using the pixel change value. In some examples, the stability module filters the pixel change value using the edge-aware filter and computes the intensity multiplier using the filtered pixel change value. The stability module computes a disparity multiplier using the disparity change value. The stability module computes the stability penalty using the intensity multiplier, the disparity multiplier, and a maximum matching cost that can be produced during plane hypothesis evaluation (e.g., the product of the intensity multiplier, the disparity multiplier, and the maximum matching cost).

The real-time active stereo system may include a confidence weight generator configured to generate a confidence weight for each pixel's stereo depth estimate in a manner that uses stereo internal data. A confidence weight may be a value that represents a level of confidence associated with a pixel's depth estimation. The confidence weight generator may generate a confidence weight associated with the selected plane hypothesis for the group of pixels based on the matching cost (e.g., the raw cost) and a pixel variation value. For example, the confidence weight generator may receive the matching costs (e.g., the raw matching costs) associated with the selected plane hypothesis and the pixel variation value and compute the confidence weight using a look-up table inputted with the matching costs and the pixel variation value. The pixel variation value may indicate the amount of pixel intensity change in the group of pixels over the spacetime window associated with the descriptors. In some examples, the look-up table may map confidence weights to combinations of pixel variation values and matching costs, which has been created from image data of a scene with known geometry.

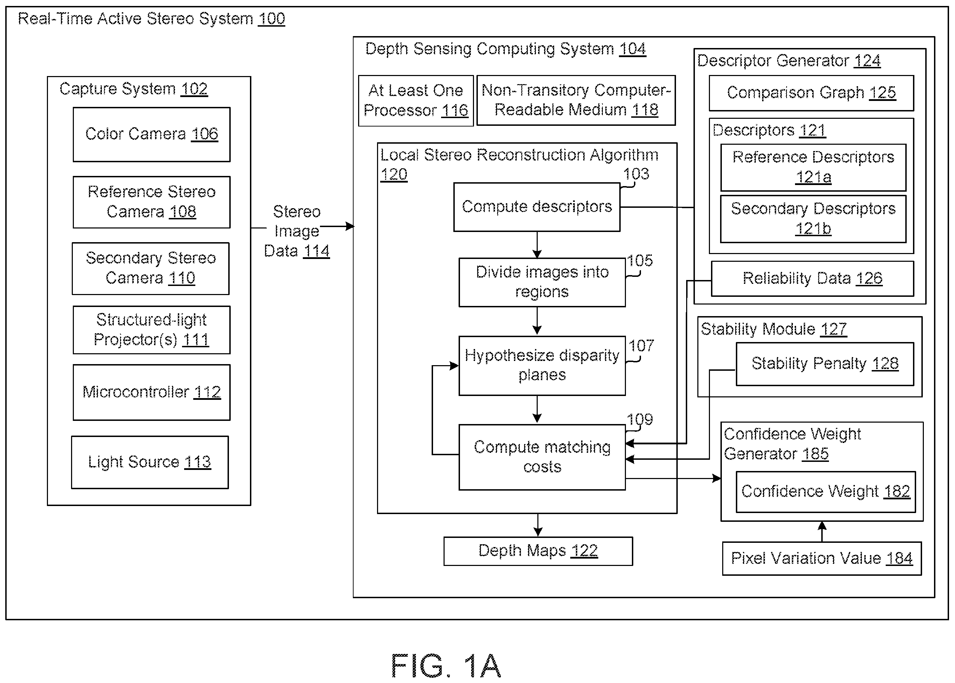

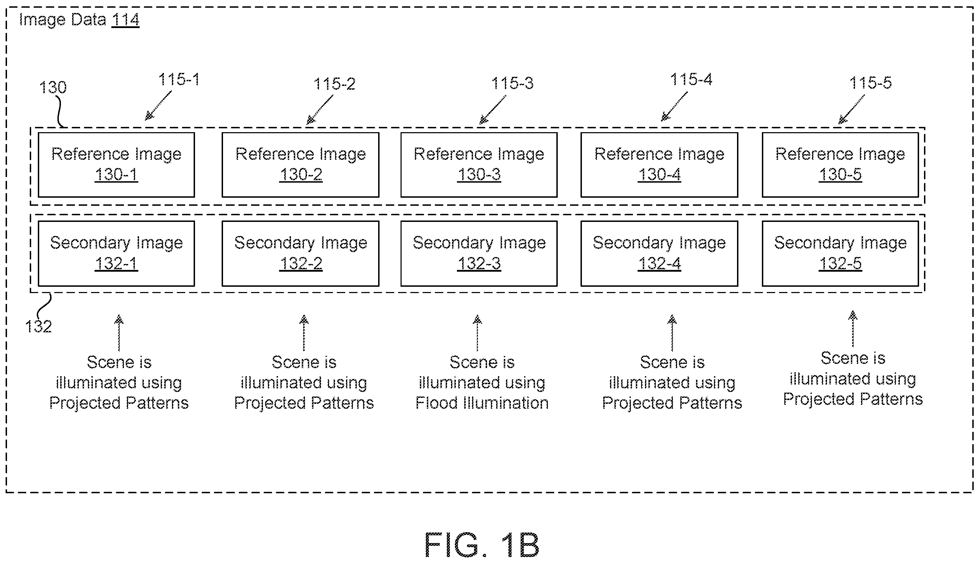

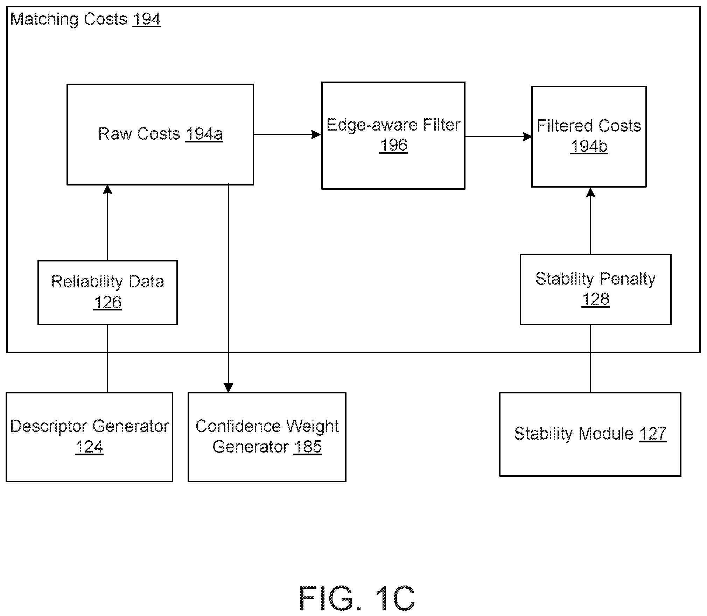

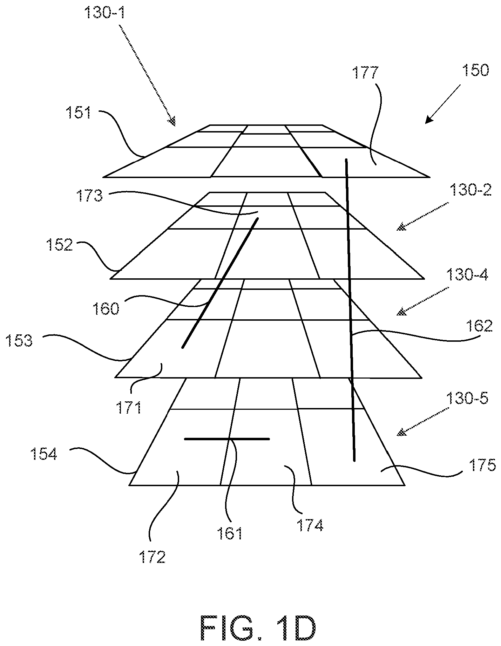

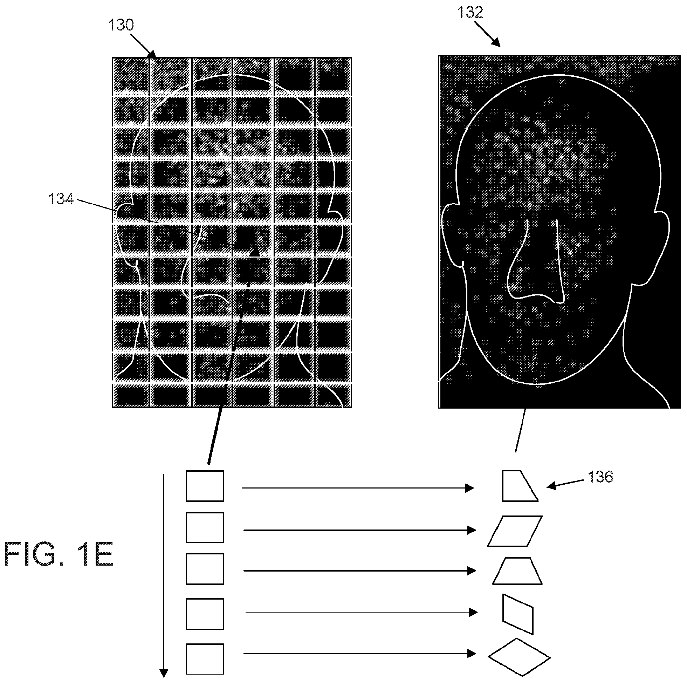

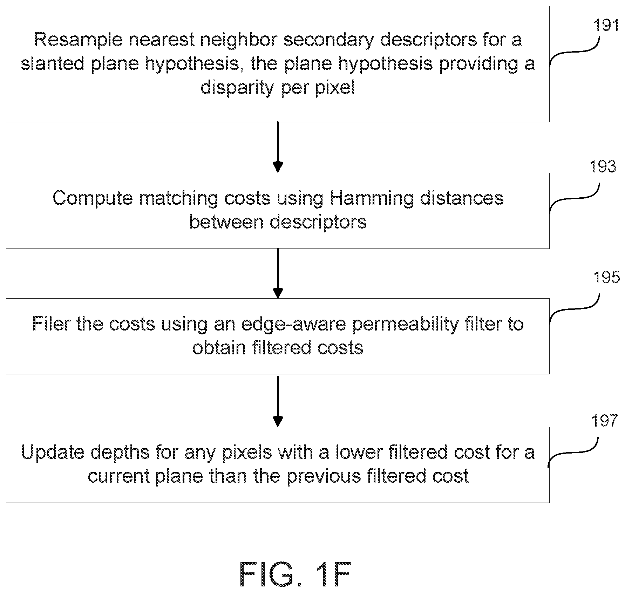

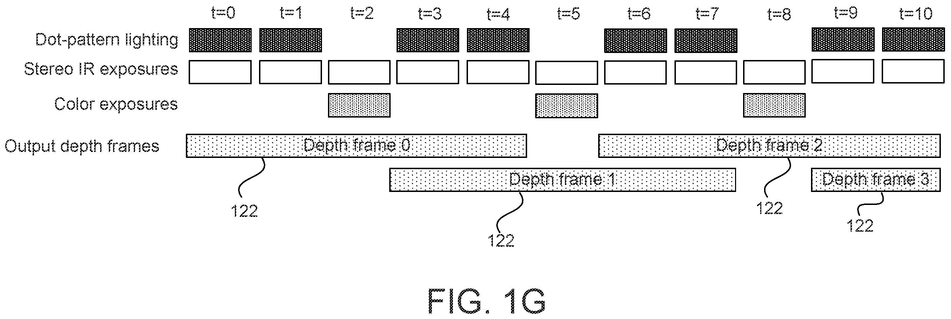

FIGS. 1 through 1G illustrate a real-time active stereo system 100 according to an aspect. The real-time active stereo system 100 is configured to generate depth maps 122 based on captured stereo image data 114 in real-time (or near real-time) and generate 3D stereo images frames to be shown on a display device. A depth map 122 includes, for each image element of a stereo image, a disparity value. The disparity value is inversely related to the distance from a camera viewpoint to the surface of an object in the scene. For example, the depth map 122 may be used to describe an image that contains information relating to the distance from a camera viewpoint to the surface of an object in the scene. In some examples, the depth map 122 is an image where the value at each pixel is how far along the relevant ray the closest surface is located.

The depth maps 122 may be used to control augmented reality, robotics, natural user interface technology, gaming, or other applications. The real-time active stereo system 100 may construct high-resolution, accurate, 3D models in real-time at a relatively high frame rate. In some examples, the real-time active stereo system 100 is a depth sensing system that can process moving scenes and generate dense, high quality depth maps 122. In some examples, the real-time active stereo system 100 generates dense, high quality depth maps 122 at 1 megapixel (or greater than 1 megapixel) at over 60 HZ.

The real-time active stereo system 100 includes a capture system 102 configured to capture stereo image data 114, and a depth sensing computing system 104 configured to generate a depth map 122 based on the stereo image data 114. The depth sensing computing system 104 includes at least one processor 116 and a non-transitory computer-readable medium 118 that stores executable instructions, that when executed by the at least one processor 116, is configured to execute a local stereo reconstruction algorithm 120 and/or execute any of the functions discussed herein. In some examples, the captured stereo image data 114 includes a sequence of images captured by the capture system 102, and the local stereo reconstruction algorithm 120 is configured to process the sequence of images to generate the depth map 122, which can be used to output re-projected image data according to a new point of view. Also, the local stereo reconstruction algorithm 120 is configured to output masks, and per-pixel surface orientation estimation.

The capture system 102 may include a pair of stereo cameras configured to generate one or more reference images and one or more secondary images. In some examples, the capture system 102 includes a color camera 106, a reference stereo camera 108, a secondary stereo camera 110, one or more structured light projectors 111, a microcontroller 112, and a light source 113 configured to project non-structured light. In some examples, the light source 113 is a near-infrared (NIR) floodlight. In some examples, the reference stereo camera 108 is considered a right camera, and the secondary stereo camera 110 is considered a left camera. The projectors 111 are configured to produce structured lighting during the stereo exposures (e.g., stereo images captured by the reference stereo camera 108 and the secondary stereo camera 110). In some examples, the projectors 111 are infrared (IR) projectors configured to project IR dot patterns. The microcontroller 112 is configured to trigger the color camera 106, the reference stereo camera 108, the secondary stereo camera 110, and the structured light projectors 111. In some examples, the microcontroller 112 is a triggering microcontroller.

In some examples, the projectors 111 include one or more banks of near-infrared (NIR) diffractive optical elements (DOEs) that project time-varying active illumination patterns. In some examples, the projectors 111 include two banks of DOEs. In some examples, each bank includes a set of DOEs. In some examples, the set of DOEs include four DOEs, and each pattern image is illuminated by one DOE from each bank. Triggering two DOEs at a time may increase the density of the projected dot pattern, which can improve the depth accuracy and coverage. In some examples, during the guide image exposure, the DOEs are turned off and an image is captured with ambient NIR illumination, provided by the light source 113.

FIG. 1B illustrates an example of the stereo image data 114 received by the depth sensing computing system 104. For example, the local stereo reconstruction algorithm 120 is configured to process images in groups of a predetermined number. In some examples, the local stereo reconstruction algorithm 120 is configured to process images in sets of ten. In some examples, the local stereo reconstruction algorithm 120 is configured to process images in sets of less than ten. In some examples, the local stereo reconstruction algorithm 120 is configured to process images in sets of greater than ten. In some examples, a signal set includes five synchronized pairs. For example, a pair of synchronized images includes a reference image captured by the reference stereo camera 108 and a secondary image captured by the secondary stereo camera 110.

As shown in FIG. 1B, the stereo image data 114 includes a first pair 115-1, a second pair 115-2, a third pair 115-3, and a fourth pair 115-4, and a fifth pair 115-5, where each of the pairs corresponds to a different temporal window (or time frame or exposure). Each pair includes a reference image 130 and a secondary image 132 relating to a separate time slice.

During the first two and last two exposures, the scene is illuminated using high-frequency projected patterns (provided by the projectors 111), and during the middle exposure (e.g., the third pair 115-3), the scene is illuminated by non-patterned lighting (e.g., flood illumination provided by the light source 113). In some examples, the dot patterns produced during the first two and last two exposures are different from each other. In some examples, one or more of the dot patterns produced during the first two and last two exposures are the same. During the first exposure, the microcontroller 112 is configured to trigger at least one of the projectors 111 to produce dot-pattern lighting to illuminate the scene, and the microcontroller 112 is configured to trigger the reference stereo camera 108 and the secondary stereo camera 110 to capture a reference image 130-1 and a secondary image 132-1, respectively, of the first pair 115-1.

During the second exposure, the microcontroller 112 is configured to trigger at least one of the projectors 111 to produce dot-pattern lighting to illuminate the scene, and the microcontroller 112 is configured to trigger the reference stereo camera 108 and the secondary stereo camera 110 to capture a reference image 130-1 and a secondary image 132-1, respectively, of the second pair 115-2. During the third exposure, the scene is illuminated by the light source 113, and the microcontroller 112 is configured to trigger the reference stereo camera 108 and the secondary stereo camera 110 to capture a reference image 130-3 and a secondary image 132-3, respectively, of the third pair 115-3. In some examples, during the third exposure, the microcontroller 112 is configured to trigger the color camera 106 to obtain a color image. In some examples, the reference image 130-3 and the secondary image 132-3 of the third pair 115-3 are not patterned images because the scene was illuminated by the light source 113. In some examples, the third pair 115-3 is considered a middle pair containing a guide image that is used for filtering matching costs 194 (e.g., raw costs 194a) (shown in FIG. 1C) using an edge-aware filter 196. In some examples, the guide image is the reference image 130-3.

During the fourth exposure, the microcontroller 112 is configured to trigger at least one of the projectors 111 to produce dot-pattern lighting to illuminate the scene, and the microcontroller 112 is configured to trigger the reference stereo camera 108 and the secondary stereo camera 110 to capture a reference image 130-4 and a secondary image 132-4, respectively, of the fourth pair 115-4. During the fifth exposure, the microcontroller 112 is configured to trigger at least one of the projectors 111 to produce dot-pattern lighting to illuminate the scene, and the microcontroller 112 is configured to trigger the reference stereo camera 108 and the secondary stereo camera 110 to capture a reference image 130-5 and a secondary image 132-5, respectively, of the fifth pair 115-5.

The stereo image data 114 includes a sequence (or stack) of reference images 130 such as reference image 130-1, reference image 130-2, reference image 130-3, reference image 130-4, and/or reference image 130-5. In some examples, the sequence (or stack) of reference images 130 is referred to as a sequence (or stack) of patterned reference images, where the patterned reference images includes reference image 130-1, reference image 130-2, reference image 130-4, and reference image 130-5 (but not reference image 130-3 because reference image 130-3 is not patterned). The stereo image data 114 includes a sequence (or stack) of secondary images 132 such as secondary image 132-1, secondary image 132-2, secondary image 132-3, secondary image 132-4, and/or secondary image 132-5. In some examples, the sequence (or stack) of secondary images 132 is referred to as a sequence (or stack) of patterned secondary images, where the patterned secondary images includes secondary image 132-1, secondary image 132-2, secondary image 132-4, and secondary image 132-5 (but not secondary image 132-3 because secondary image 132-3 is not patterned).

The local stereo reconstruction algorithm 120 is configured to process the reference images 130 and the secondary images 132 to generate a depth map 122. For example, in operation 103, the local stereo reconstruction algorithm 120 is configured to compute descriptors 121 (e.g., binary spacetime descriptors) based on the stereo image data 114. In some examples, only the patterned images are used for the computation of the descriptors 121 (e.g., the first pair 115-1, the second pair 115-2, the fourth pair 115-4, and the fifth pair 115-5). In some examples, reference image 130-3 and the secondary image 132-3 of the third pair 115-3 is not used for the computation of the descriptors 121, but the reference image 130-3 or the secondary image 132-3 is used in the cost filtering (e.g., edge-aware filter 196). In some examples, only the reference image 130-3 is used in the cost filtering because the secondary image 132-3 is not pixel-aligned to the cost volume. The descriptors 121 are computed for the reference images 130 (e.g., referred to as reference descriptors 121a), and are computed for the secondary images 132 (e.g., referred to as secondary descriptors 121b). In some examples, for improved accuracy, the local stereo reconstruction algorithm 120 is configured to shift the secondary images 132 by subpixel offsets and compute the secondary descriptors 121b on those shifted images as well.

FIG. 1D illustrates a graphical representation of the computation of the descriptors 121 according to an aspect. For example, as shown in FIG. 1D, a stack of image portions within a spacetime window 150 includes an image portion 151, an image portion 152, an image portion 153, and an image portion 154, and each of the image portions are captured from a different time window. The image portion 151, the image portion 152, the image portion 153, and the image portion 154 may collectively refer to the image data within the spacetime window 150. Each of the image portions includes a plurality of pixels, each having a pixel intensity value. Pixels in the same image portion are considered in the same time slice (or same time window), and different image portions are from different time slices (or different time windows).

These four image portions may correspond to either the stack of patterned reference images or the stack of patterned secondary images. If the image portions are the stack of patterned reference images, the image portion 151 may be a portion of the reference image 130-1, the image portion 152 may be a portion of the reference image 130-2, the image portion 153 may be a portion of the reference image 130-4, and the image portion 1154 may be a portion of the reference image 130-5. If the image portions are the stack of patterned secondary images, the image portion 151 may be a portion of the secondary image 132-1, the image portion 152 may be a portion of the secondary image 132-2, the image portion 153 may be a portion of the secondary image 132-4, and the image portion 1154 may be a portion of the secondary image 132-5.

The descriptors 121 are computed over a relatively small spacetime window 150. For example, the descriptors 121 are computed over a spacetime window 150 with a spatial extent of a predetermined size and a temporal extent of a predetermined size. In some examples, as shown in FIG. 1D, the spatial extent is 3 x 3 pixels, and the temporal extent is 4 temporal windows. In some examples, the spatial extent is less than 8 x 8 pixels, and the temporal extent is less than 4 temporal windows. In some examples, the spatial extent is equal to or greater than 8 x 8 pixels, and the temporal extent is greater than 4 temporal windows. In some examples, the spatial extent is within a range of 2 x 2 pixels to 8 x 8 pixels and the temporal extent is within a range of 2 to 6 temporal windows. Also, as indicated above, a different random-dot illumination pattern is projected during each of the exposures, and the guide image with flood illumination is not used in the computation of descriptors 121 but will be used for filtering. The spatial compactness of the descriptors 121 may provide increased robustness to oblique geometry and depth discontinuities.

A descriptor 121 includes binary computer data that represents comparisons of pixels within the spacetime of the stack of image portions. In some examples, each of the descriptors 121 includes a concatenation of a number of pair-wise intensity comparisons in the spacetime window 150. In some examples, each descriptor 121 includes a 32-bit binary descriptor that represents 32 pair-wise intensity comparisons in the spacetime window 150. However, a descriptor 121 may include any number of bits including bits more than thirty two or bit less than thirty two.

As shown in FIG. 1D, a line 160 represents a comparison between pixel 171 in the image portion 153 and pixel 173 in the image portion 152 (e.g., a comparison between pixels in different time slices). If the intensity value of the pixel 171 is greater than the intensity value of the pixel 173, a comparison value (e.g., 1) may be recorded in the corresponding bit position of the descriptor 121. If the intensity value of the pixel 171 is less than the intensity value of the pixel 173, a comparison value (e.g., 0) may be recorded in the corresponding bit position of the descriptor 121.

A line 161 represents a comparison between pixel 172 in the image portion 154 and pixel 174 in the image portion 154 (e.g., a comparison between pixels in the same time slice). A line 162 represents a comparison between pixel 175 in the image portion 154 and pixel 177 in the image portion 151 (e.g., a comparison between pixels in different time slices). In some examples, the binary spacetime descriptor would include a concatenation of a plurality of pair-wise intensity comparisons (e.g., a plurality of comparison values) such as [0, 1, 1, 0....N) over the spacetime window 150, where the integer N defines the length of (or the number of bits within) a descriptor 121. Then, another descriptor 121 would be computed over another spacetime window 150. It is noted that spacetime windows 150 are overlapping in both time and space, thus the spacetime windows 150 are different but not necessarily distinct because the same pixel may be contained in many spacetime windows 150.

Referring to FIGS. 1A and 1E, after the descriptors 121 are computed, in operation 105, the local stereo reconstruction algorithm 120 is configured to divide the set of images of the stereo image data 114 into regions 134 of a predetermined size. It is noted that the regions 134 may be referred to as tiles. In some examples, a region 134 is a group of pixels. In some examples, the regions 134 are rectangular tiles having the same size. In some examples, the images are split into independent regions 134 of a predetermined size (e.g., 32 x 28), with overlapping regions 134 of a predetermined size (e.g., 36 x 32). Then, the local stereo reconstruction algorithm 120 is configured to process the regions 134 using the descriptors 121 to generate a depth map 122. In some examples, the local stereo reconstruction algorithm 120 is configured to process the regions 134 in parallel.

The local stereo reconstruction algorithm 120 is configured to iterate between i) hypothesizing disparity planes (operation 107) for all tiles and ii) computing and aggregating matching costs 194 (operation 109) in parallel over each region 134. The disparity planes may be referred to as plane hypotheses 136. In some examples, the plane hypotheses 136 include slanted (or tilted) plane hypotheses. Operation 107 and operation 109 may be considered a plane evaluation loop that implements real-time spacetime stereo matching using slanted (or titled) plane guesses at each region 134 of the spacetime window 150, computing the matching costs 194 (e.g., raw costs 194a) based on Hamming distances between the descriptors 121 and aggregating (filtering) the raw costs 194a using an edge-aware filter 196 to obtain filtered costs 194b, as shown in FIG. 1C. In some examples, the edge-aware filter 196 is a permeability filter.

As shown in FIG. 1C, matching costs 194 may be referred to as raw costs 194a before the edge-aware filter 196 is applied. Matching costs 194 may be referred to as filtered costs 194b after the edge-aware filter 196 is applied. A matching cost 194 may refer to or represent the level of similarity (or dissimilarity) (expressed numerically) between two descriptors (and therefore between two pixels). In other words, the matching cost 194 may refer to or represent the amount of similarity (or dissimilarity) between a pixel or group of pixels in one image to a pixel or group of pixels in another image. In some examples, the matching costs 194 (e.g., matching costs) are referred to as a cost volume. In some examples, the matching costs 194 are a measure of the difference in information between a pixel or a group of pixels in one image to a pixel or a group of pixels in another image. In some examples, the matching costs 194 (e.g., the raw costs 194a) are computed based on a number of bits in which two descriptors 121 differ (e.g., also referred to as Hamming distance). In some examples, the costs 194 between the descriptors may be the Hamming distance between two descriptors. The Hamming distance may be the number of bit positions at which the two descriptors differ. The Hamming distance (e.g., the matching cost) can be computed by executing an exclusive OR operation on two descriptors 121 followed by a population count (e.g., also referred to as a popcount).

The plane hypothesis 136 for a region 134 having the lowest aggregated (filtered) cost 194b (or a filtered cost 194b below a threshold level) may be selected as a potential match for some pixels in the region 134 in a given iteration. It is noted that the plane hypotheses 136 are shared across regions 134, but each pixel in a particular region 134 is selected with a best-fit slanted plane hypothesis 136. The Hamming distance between two descriptors 121 is the number of differences between the bits of a reference descriptor 121a and the bits of a secondary descriptor 121b. In other words, a number of plane hypotheses 136 are tested for each region 134 by aggregating and filtering Hamming distances between the precomputed descriptors 121, and the plane hypothesis 136 having the lowest filtered cost 194b (or a filtered cost 194b below a threshold level) is selected as a potential match for a particular pixel.

Then, the local stereo reconstruction algorithm 120 may repeat this iteration by returning to operation 107 to generate new plane hypotheses 136 based on the results of operation 109. For example, the local stereo reconstruction algorithm 120 may generate new plane hypotheses 136 by modifying the potential matches from the results of operation 109 or copying plane hypotheses 136 from pixels in neighboring regions 134, and then testing the new plane hypotheses 136 by aggregating and filtering the Hamming distances between the descriptors 121.

In further detail, the local stereo reconstruction algorithm 120 is configured to iteratively sample the descriptors 121 along a plurality of plane hypotheses 136 for each of the regions 134. FIG. 1E illustrates a reference image 130 and a secondary image 132 for one of the pairs of images of the stereo image data 114. As shown on FIG. 1E, the reference image 130 is divided into regions 134. The local stereo reconstruction algorithm 120 is configured to find matches in the secondary image 132 to a given region 134 in the reference image 130 by evaluating a number of plane hypotheses 136 against the corresponding region 134 in the secondary image 132. In other words, for each region 134, the local stereo reconstruction algorithm 120 determines a plurality of plane hypotheses 136 to guess and then evaluates those plane hypotheses 136 against the region 134. In some examples, the local stereo reconstruction algorithm 120 is configured to evaluate multiple plane hypotheses 136 in parallel over several regions 134 (e.g., the regions 134 are processed in parallel). In some examples, multiple plane hypotheses 136 for a single region 134 are processed in parallel.

In some examples, for each point (pixel), the local stereo reconstruction algorithm 120 hypothesizes not only a depth, but also the tangent plane at that point, which may provide for a more accurate comparison when looking at the neighborhood of the point. For a region 134, the local stereo reconstruction algorithm 120 tests a consistent such plane against all points in the region 134, to amortize computation.

In some examples, a plane hypothesis 136 is a depth estimation that uses a plane (e.g., a slanted plane) to represent the local surface geometry of a feature (e.g., object) depicted in the stereo data 114. In some examples, for each region 134, the depth sensing computing system 104 evaluates a number of planes (e.g., slanted planes), where each plane evaluation produces a separate plane hypothesis 136 (or depth estimation at a particular plane). For example, the plurality of plane hypotheses 136 may include a depth estimation that uses a first plane (e.g., a first slanted plane) to represent the local surface geometry, a depth estimation that uses a second plane (e.g., a second slanted plane) to represent the local surface geometry (and so forth), where the second plane has a different orientation (e.g., different slant) than the first plane. Then, the depth estimation (e.g., the plane hypothesis 136) having the lowest matching cost 194 is selected for that region 134.

In particular, for a particular plane hypothesis 136, the local stereo reconstruction algorithm 120 is configured to re-sample the secondary descriptors 121b for the region 134 along the plane hypothesis 136. For example, the plane hypothesis 136 provides a disparity per pixel, which is used to resample the nearest neighbor secondary descriptor 121b. The local stereo reconstruction algorithm 120 is configured to compute the raw cost 194a between the re-sampled secondary descriptors 121b in the region 134 of the secondary image 132 and the reference descriptors 121a in the corresponding region 134 of the reference image 130 by computing the Hemming distances between the re-sampled secondary descriptors 121b and the reference descriptors 121a in that region 134.

Then, the local stereo reconstruction algorithm 120 is configured to aggregate (for filter) the raw costs 194a using the edge-aware filter 196 and the guide image (e.g., the reference image 130-3) to obtain filtered costs 194b, which can compensate for regions 134 with low signal, which is further described later in the disclosure. In some examples, the edge-aware filter 196 is a permeability filter. In some examples, the edge-aware filter 196 is a bilateral filter. In some examples, the edge-aware filter 196 is a guided filter. The edge-aware filter 196 is used to regularize noisy cost values in low-contrast regions of the guide image while retaining high-frequency details in high-contrast image regions of the guide image, which may correspond to depth edges in the scene. More generally, even with space time patterns, at any given pixel, there may not be a unique match, but it may be likely that nearby pixels should match to nearby points in the other image. The edge-aware filter 196 uses the guide image to combine data at locations apart from the edges.

The descriptors 121 are computed once in the preprocessing operation (e.g., operation 103), and the descriptors 121 are not re-computed during the plane evaluation loop (e.g., operation 107 and operation 109). For example, because the descriptors 121 are relatively small in the spacetime window 150, the local stereo reconstruction algorithm 120 can precompute the descriptors 121 in a processing step, thereby decreasing the amount of computer resources and increasing the speed to generate the depth map 122. Also, due to the compactness of the descriptors 121, the local stereo reconstruction algorithm 120 is configured to perform a nearest neighbor sample of the descriptors 121, which is computationally fast.

In some examples, the plane evaluation loop includes four sub-steps. FIG. 1F illustrates a flowchart depicting sub-steps of a plane evaluation loop executable by the local stereo reconstruction algorithm 120 according to an aspect. Operation 191 includes resampling nearest neighbor secondary descriptors 121b for a plane hypothesis 136, where the plane hypothesis 136 provides a disparity per pixel. Operation 193 includes computing raw costs 194a using Hamming distances between the descriptors 121. Operation 195 includes filtering the raw costs 194a using the edge-aware filter 196 to obtain filtered costs 196b, which can compensate for regions with low signal. Operation 197 includes updating depths for any pixels with a lower filtered cost 194b for a current plane hypothesis 136 than the previous filtered costs 194.

FIG. 1G illustrates a timing diagram for the stereo images in a repeating pattern-pattern-guide sequence according to an aspect. In some examples, the stereo images are captured at 180Hz in the repeating pattern-pattern-guide sequence. Each stereo depth map 122 is computed over a rolling window of 5 frames (4 patterned, 1 guide) centered on a guide image. If an RGB camera is used for color texturing, it is triggered synchronously with the guide image. This may ensure good alignment of depth edges with the associated texture map.

Referring back to FIG. 1A, the depth sensing computing system 104 may include a descriptor generator 124 that can reduce the amount of redundant information included within a particular descriptor 121, which can incur by the presence of cycles in a comparison graph 125. For example, the descriptor generator 124 may generate a descriptor 121 that increases the information content of the descriptor 121 by strategically sampling pixels to produce comparisons that minimize or avoid cycles in a comparison graph 125. By increasing the information content of the descriptors 121, the descriptors 121 may be more accurate for determining matches between images.

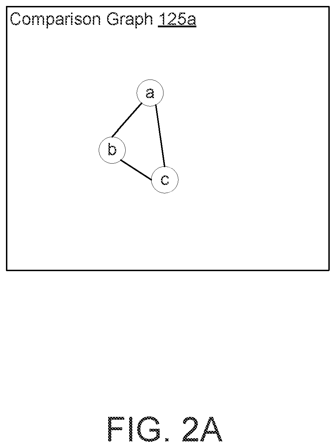

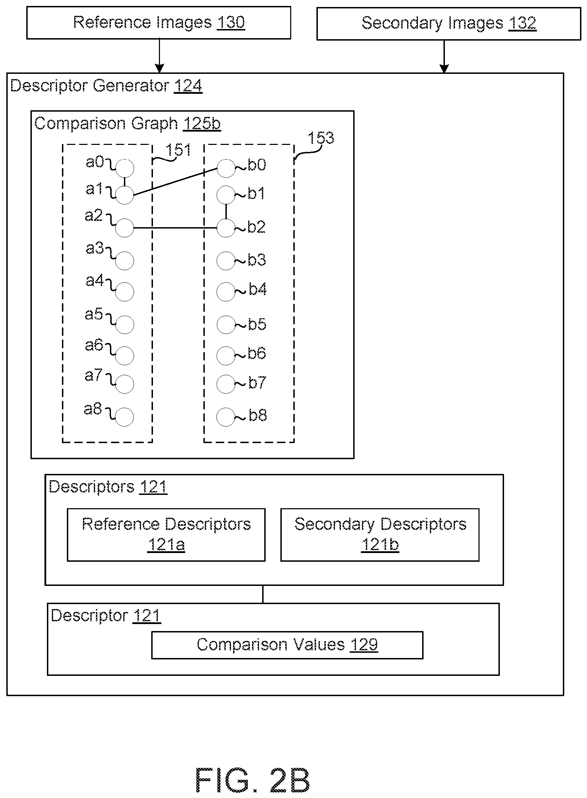

FIG. 2A illustrates a comparison graph 125a for comparing pixels in a manner that can introduce redundancy in a descriptor 121. FIG. 2B illustrates a descriptor generator 124 for reducing the amount of redundant information in a descriptor 121 according to an aspect.

Referring to FIG. 2A, in an example, there may be three pixels [a, b, c] that can be compared to form a descriptor 121, and three pairwise intensity comparisons can be made. Performing all three pairwise comparisons will result in a comparison graph 125a as shown in FIG. 2A. There are eight possible bit combinations but only six possible order relations, e.g., the bit combination [a>b, b>c, a>c]=[1,1,0] is not valid, since a>b and b>c which results in a>c, so a>c is contradictory in light of a>b and b>c. Similarly, [a>b, b>c, a>c]=[1,1,1] is redundant in that a>c=1 is already implied by the first two bits. Therefore, in order to minimize redundant bits in the descriptor 121, it may be desirable to avoid cycles in the comparison graph 125.

Referring to FIG. 2B, instead of selecting the pixels for the comparisons in a random manner (or semi-random manner), the descriptor generator 124 may compute a descriptor 121 by alternatively 1) selecting pixels from the same time slice and 2) selecting pixels from different time slices, thereby forming a comparison graph 125. For example, the descriptor generator 124 may receive the reference images 130 and the secondary images 132, and compute reference descriptors 121a using the reference images 130 and compute secondary descriptors 121b using the secondary images 132 in a manner as shown in the comparison graph 125b. Pixels (e.g., a0, a1, a2, a3, a4, a5, a6, a7, a8) in the left column may depict the image portion 151 of FIG. 1D. Pixels (e.g., b0, b1, b2, b3, b4, b5, b6, b7, b8) in the right column may depict the image portion 153 of FIG. 1D. An intensity comparison between two pixels results in a comparison value (e.g., one or zero) being recorded in the descriptor.

The descriptor generator 124 may alternatively select one spatial edge (e.g., a comparison between two pixels within the same time slice) and one temporal edge (e.g., a combination between pixels from different time slices). For example, in a first comparison, the descriptor generator 124 may select pixel a0 and pixel a1 (thereby creating spatial edge a0-a1), where pixel a0 and pixel a1 are from the same time slice (e.g., image portion 151). For the next comparison, the descriptor generator 124 may select pixel a1 and pixel b0 (thereby creating temporal edge a1-b0), where pixel a1 and pixel b0 are from different time slices (e.g., pixel a1 is from image portion 151, pixel b0 is from image portion 153). Then, the process may repeat, e.g., the selection of two pixels in the same time slice followed by the selection of two pixels in different time slices. For example, for the next comparison, the descriptor generator 124 may select pixel b1 and pixel b2 (thereby creating spatial edge b1-b2), where pixel b1 and pixel b2 are from the same time slice (e.g., image portion 153). For the next comparison, the descriptor generator 124 may select pixel b2 and pixel a2 (thereby creating temporal edge b2-a2), where pixel b2 and pixel a2 are from different time slices. This process is then repeated for all the image portions in the spacetime window 150. This sampling strategy may ensure that spatial and temporal edges are evenly distributed (or substantially evenly distributed).

The descriptor generator 124 may repeat this process until all the pixels in the spacetime window 150 have been selected or until the descriptor 121 reaches its maximum number of bits. Also, the descriptor generator 124 may avoid re-selecting a pixel that has already been used in a comparison until all the pixels in the spacetime window 150 have been selected. In some examples, if all pixels in the spacetime window 150 have been selected (and there are still comparisons to be made), the descriptor generator 124 may select pixels in a manner that the graph structure of the pixels have a cycle length that is greater than a threshold level and/or greater than a cycle length of another possible arrangement (e.g., the descriptor generator 124 may select pixels in a manner that long cycles are preferred over shorter cycles).

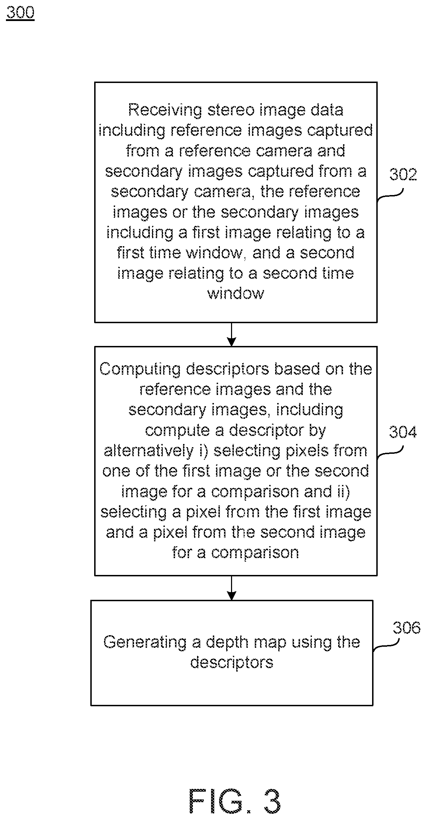

FIG. 3 illustrates a flowchart depicting example operations of generating a depth map 122 using descriptors 121 generated by the descriptor generator 124 according to an aspect. Although the flowchart 300 of FIG. 3 illustrates the operations in sequential order, it will be appreciated that this is merely an example, and that additional or alternative operations may be included. Further, operations of FIG. 3 and related operations may be executed in a different order than that shown, or in a parallel or overlapping fashion.

Operation 302 includes receiving stereo image data 114 including reference images 130 captured from a reference stereo camera 108 and secondary images 132 captured from a secondary stereo camera 110, where the reference images 130 or the secondary images 132 includes a first image relating to a first time window, and a second image relating to a second time window.

Operation 304 includes computing descriptors 121 (e.g., reference descriptors 121a, secondary descriptors 121b) based on the reference images 130 and the secondary images 132, including computing a descriptor 121 by alternatively i) selecting pixels from one of the first image (e.g., image portion 151) or the second image (e.g. image portion 153) for a comparison and ii) selecting a pixel from the first image and a pixel from the second image for a comparison. Operation 306 includes generating a depth map 122 using the descriptors 121.

Referring back to FIG. 1A, the depth sensing computing system 104 may include a descriptor generator 124 that generates (or computes) reliability data 126 associated with the descriptors 121. The reliability data 126 may include information that indicates whether the comparison values 129 are reliable, unreliable, or neither. As shown in FIG. 1A, the reliability data 126 may be used to update (or adjust) the matching costs 194 (e.g., the raw costs 194a) during plane hypothesis evaluation, thereby leading to a more accurate match.

A descriptor 121 may be generated by comparing pixel intensities in a spacetime window 150, but some comparisons may be more usual and reliable than other comparisons. For example, if the magnitude of a comparison between a first pixel and a second pixel is relatively large, the comparison may be considered more reliable. If the difference (e.g., absolute difference) is relatively small, the comparison may be considered less reliable. The descriptor generator 124 may generate reliability data 126 associated with the descriptors 121 based on intensity differences between the pixel values. Then, the depth sensing computing system 104 can adjust the raw costs 194a with the reliability data 126 during the plane evaluation loop.

The depth sensing computing system 104 may evaluate a plurality of plane hypotheses 136 for a group of pixels (e.g., a region 134) using the descriptors 121, which includes computing a matching cost 194 (e.g., raw cost 194a) between the descriptors 121 for each plane hypothesis 136. As shown in FIGS. 1A and 1C, the depth sensing computing system 104 may adjust the raw costs 194a with the reliability data 126. In some examples, the raw costs 194a are filtered using the edge-aware filter 196 to obtain filtered costs 194b. Then, the depth sensing computing system 104 may select a plane hypothesis 136 for the group of pixels that has the lowest filtered (adjusted) cost 194b.

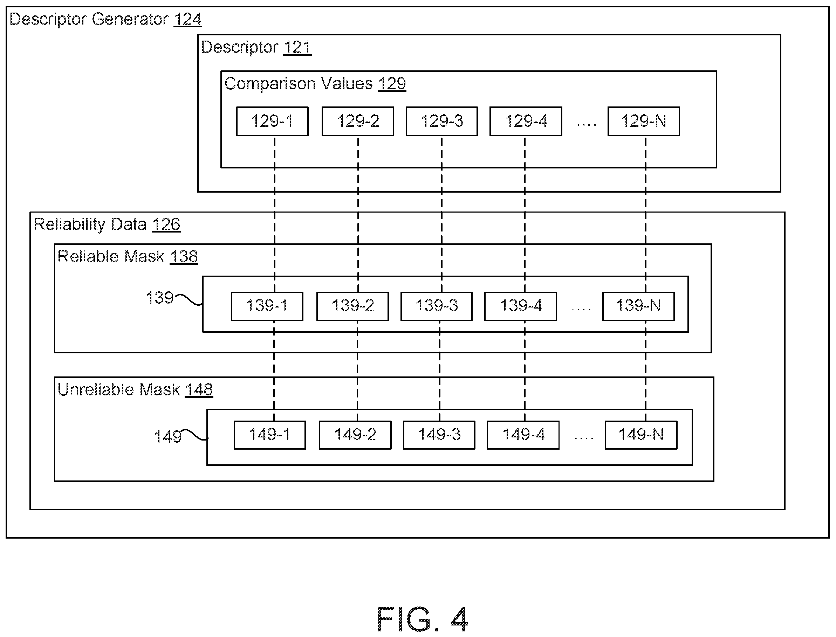

FIG. 4 illustrates a descriptor generator 124 for generating reliability data 126 according to an aspect. As shown in FIG. 4, a descriptor 121 includes comparison values 129 such as comparison value 129-1, comparison value 129-2, comparison value 129-3, and comparison value 129-4 through comparison value 129-N, where N is an integer defining the total number of bits in the descriptor 121. The descriptor generator 124 may generate a reliable mask 138 and an unreliable mask 148. The reliable mask 138 may include information that indicates whether each comparison value 129 in the descriptor 121 is reliable. The unreliable mask 148 may include information that indicates whether each comparison value 129 in the descriptor 121 is unreliable.

The reliable mask 138 and the unreliable mask 148 may have the same size as the descriptor 121 and each bit position in the descriptor 121 has a corresponding bit in the reliable mask 138 and the unreliable mask 148. For example, the reliable mask 138 may include a plurality of reliable bits 139 such as reliable bit 139-1, reliable bit 139-2, reliable bit 139-3, reliable bit 139-4 through reliable bit 139-N. The reliable bit 139-1 may correspond to the comparison value 129-1, and the reliable bit 139-2 may correspond to the comparison value 129-2, and so forth. The unreliable mask 148 may include a plurality of unreliable bits 149 such as unreliable bit 149-1, unreliable bit 149-2, unreliable bit 149-3, unreliable bit 149-4 through unreliable bit 149-N. The unreliable bit 149-1 may correspond to the comparison value 129-1, and the unreliable bit 149-2 may correspond to the comparison value 129-2, and so forth.

When computing the descriptor 121, the descriptor generator 124 may compute the difference between an intensity value of a first pixel and an intensity value of a second pixel. If the magnitude of the comparison (e.g., the difference between intensity values) exceeds a reliable threshold, the descriptor generator 124 may generate a first value (e.g., one) in the respective bit position in the reliable mask 138. For example, with respect to the comparison value 129-1, if the intensity difference between the two pixels is greater than the reliable threshold, the descriptor generator 124 may record the first value (e.g., one) in the reliable bit 139-1. With respect to the comparison value 129-2, if the intensity difference between the two pixels is less than the reliable threshold, the descriptor generator 124 may not record the first value (e.g., one) in the reliable bit 139-2 (e.g., nothing is recorded). In some examples, if the intensity difference between the two pixels is less than the reliable threshold, the descriptor generator 124 may record a second value (e.g., zero) in the reliable bit 139-2. This process continues for all the bits in the reliable mask 138.

If the magnitude of a comparison (e.g., the pixel intensity difference) is less than an unreliable threshold, the descriptor generator 124 may generate a first reliable value (e.g., one) in the respective bit position in the unreliable mask 148. In some examples, the unreliable threshold is less than the reliable threshold. With respect to the comparison value 129-1, if the intensity difference between the two pixels is less than the unreliable threshold, the descriptor generator 124 may record the first value (e.g., 1) in the unreliable bit 149-1. With respect to the comparison value 129-2, if the intensity difference between the two pixels is greater than the unreliable threshold, the descriptor generator 124 may not record the first value (e.g., one) in the unreliable bit 149-2 (e.g., nothing is recorded). In some examples, if the intensity difference between the two pixels is greater than the unreliable threshold, the descriptor generator 124 may record a second value (e.g., zero) in the unreliable bit 149-2. This process continues for all the bits in the unreliable mask 148.

The reliable mask 138 and the unreliable mask 148 are used to weight the comparison during the cost computation (e.g., weight the raw costs 194a). For instance, instead of counting the positions at which the reference descriptor 121a and the secondary descriptor 121b (e.g., the Hamming distance), the depth sensing computing system 104 determines whether the bit position was marked as reliable or unreliable using the reliable mask 138 and the unreliable mask 148. In some examples, the depth sensing computing system 104 computes an XOR operation on the reference descriptor 121a and the secondary descriptor 121b, and then executes a bitwise AND operation with the reliable mask 138 and the unreliable mask 148, which may be followed by a population count. In some examples, the depth sensing computing system 104 counts the reliable comparisons twice, discards the unreliable comparisons, and counts comparisons that are neither reliable nor unreliable once.

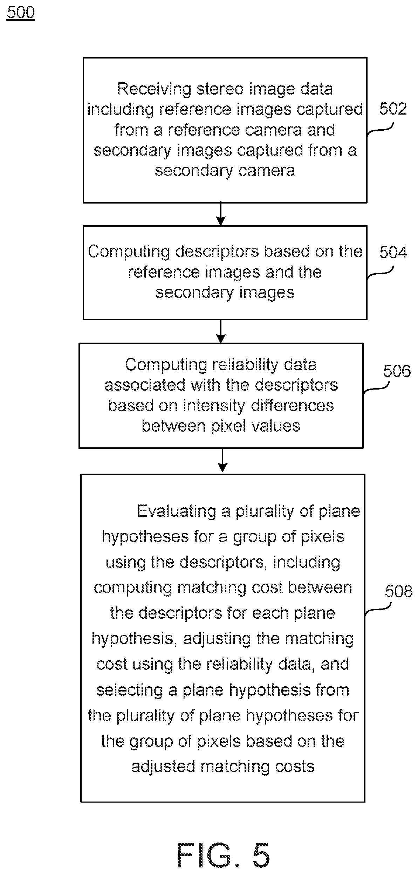

FIG. 5 illustrates a flowchart 500 depicting example operations of generating a depth map 122 in which matching costs 194 (e.g., raw costs 194a) are updated with the reliability data 126 according to an aspect. Although the flowchart 500 of FIG. 5 illustrates the operations in sequential order, it will be appreciated that this is merely an example, and that additional or alternative operations may be included. Further, operations of FIG. 5 and related operations may be executed in a different order than that shown, or in a parallel or overlapping fashion.

Operation 502 includes receiving stereo image data 114 including reference images 130 captured from a reference stereo camera 108 and secondary images 132 captured from a secondary stereo camera 110. Operation 504 includes computing descriptors 121 based on the reference images 130 and the secondary images 132. Operation 506 includes computing reliability data 126 associated with the descriptors 121 based on intensity differences between pixel values.

Operation 508 includes evaluating a plurality of plane hypotheses 136 for a group of pixels using the descriptors 121, including computing a matching cost 194 (e.g., raw cost 194a) between the descriptors 121 for each plane hypothesis 136, adjusting the matching cost 194 using the reliability data 126, and selecting a plane hypothesis 136 from the plurality of plane hypotheses 136 for the group of pixels based on the adjusted matching costs 194. In some examples, after the matching costs 194 (e.g., the raw costs 194a) are updated with the reliability data 126, the matching costs 194 are filtered to obtain filtered costs 194b, and the filtered costs 194b are used to select a plane hypothesis 136.

Referring back to FIG. 1A, the depth sensing computing system 104 may include a stability module 127 that can increase stability of generating depth maps 122 by reducing the amount of temporal flicker. In some conventional systems, high-frequency temporal flickering may occur in low-signal areas such as dark hair, for example. In order to avoid (or reduce) flickering, the depth estimate at a pixel in a frame should be close to the estimate in the last frame if the inputs that produced that estimate also have not changed.

In the real-time active stereo system 100, descriptors 121 are used, where small changes in inputs (e.g., camera noise) may cause a comparison value 129 in the descriptor 121 to change (e.g., change from one to zero or vice versa). Also, in low-signal areas, there may be two depths that have similar costs. Although small input changes might produce small changes in the costs 194, these two cost minima may be far apart and the estimate may switch between them (e.g. one might have the lower cost at one point and the other might have the lower cost at another point).

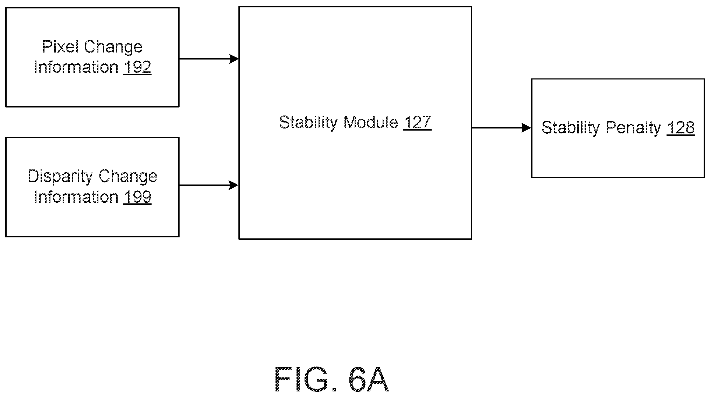

FIGS. 6A through 6D illustrate a stability module 127 for reducing (or eliminating) flicker. To reduce temporal flicker (thereby increase the stability of the real-time active stereo system 100), as shown in FIG. 6A, the stability module 127 may compute a stability penalty 128 based on pixel change information 192 and disparity change information 199. For example, the stability module 127 may compute the pixel change information 192 by determining the amount of the pixel intensity change between the inputs (e.g., reference images 130) for the current depth map 122a and the inputs (e.g., reference images 130) for the previous depth map 122b at each pixel. The stability module 127 may compute the disparity change information 199 by determining the amount of disparity change between the disparity 135 from the previous depth map 122b and the proposed disparity 137 in the current depth map 122a for each pixel. The stability module 127 may compute the stability penalty 128 using the pixel change information 192 and the disparity change information 199. The depth sensing computing system 104 may update the filtered costs 194b with the stability penalty 128 during the plane evaluation loop.

The depth sensing computing system 104 may evaluate a plurality of plane hypotheses 136 for a group of pixels using the descriptors 121, which includes computing matching costs 194 (e.g., raw costs 194a) between the descriptors 121 for each plane hypothesis 136. In some examples, the raw costs 194a are filtered using the edge-aware filter 196 to obtain filtered costs 194b. The depth sensing computing system 104 may adjust the filtered costs 194b with the stability penalty 128 (e.g., add the stability penalty 128 to the filtered costs 194b). Then, the depth sensing computing system 104 may select a plane hypothesis 136 for the group of pixels that has the lowest filtered (adjusted) cost 194b.

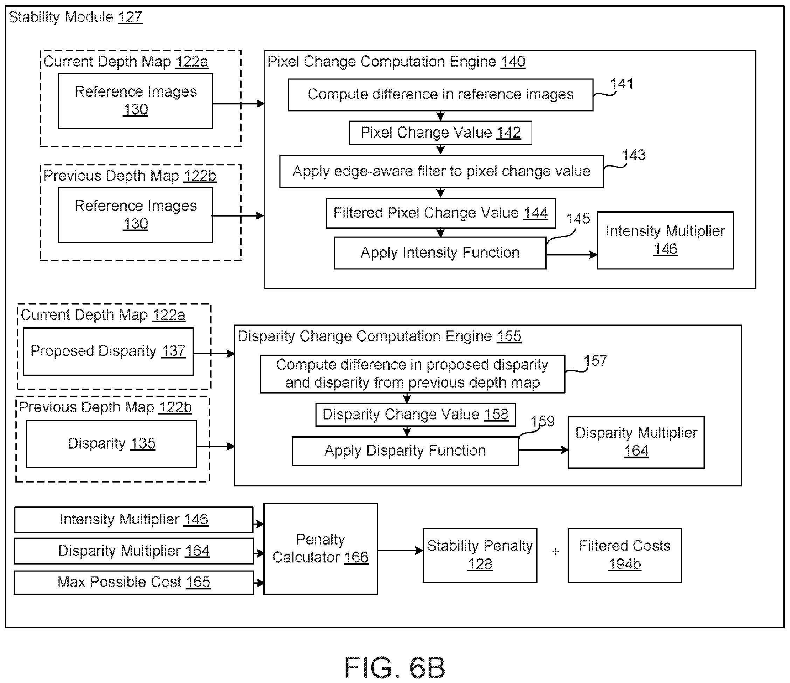

As shown in FIG. 6B, the stability module 127 includes a pixel change computation engine 140 configured to compute an intensity multiplier 146 based on the pixel change information 192. The pixel change computation engine 140 may receive the reference images 130 that are the inputs for the current depth map 122a (e.g., depth frame 1 in FIG. 1G) and the reference images 130 that are the inputs for the previous depth map 122b (e.g., depth frame 0 in FIG. 1G). The reference images 130 may include the patterned images (e.g., reference images 130-1, 130-2, 130-4, 130-5), which are the images used as inputs to generate depth maps 122. For each of the patterned images that is the input for the current depth map 122a, in operation 141, the pixel change computation engine 140 may compute (at each pixel) the difference between this pixel value and the value of the pixel in a corresponding reference image 130 associated with the previous depth map 122b to generate a pixel change value 142. In some examples, the pixel change value 142 is the absolute difference in pixel intensities. However, the stability module 127 may employ another technique (besides absolute difference) to derive the pixel intensity change.

In operation 143, the pixel change computation engine 140 may apply the edge-aware filter 196 (e.g., used in the cost computation) to the pixel change value 142 to compute a filtered pixel change value 144. In operation 145, the pixel change computation engine 140 may apply an intensity function 168 to the filtered pixel change value 144 to compute the intensity multiplier 146. In some examples, the intensity multiplier 146 is a value between zero and one.

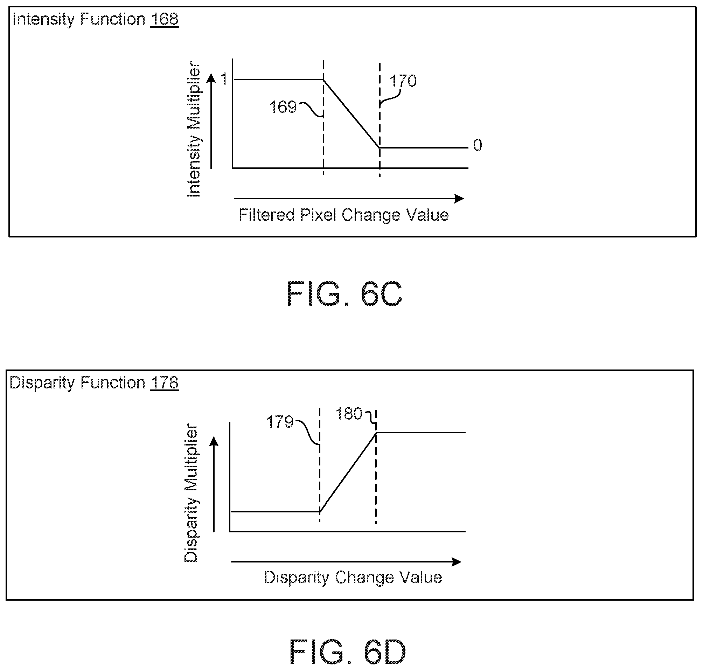

FIG. 6C illustrates an example of the intensity function 168. As shown in FIG. 6C, if the filtered pixel change value 144 is relatively small, the intensity multiplier 146 may have a first value (e.g., one). In some examples, if the filtered pixel change value 144 is in a range of zero to a first threshold 169, the intensity multiplier 146 may have the first value (e.g., one). However, if the filtered pixel change value 144 begins to exceed the first threshold 169 towards a second threshold 170, the intensity multiplier 146 may decrease to a value between the first value (e.g., one) and a second value (e.g., zero). If the filtered pixel change value 144 is relatively large, the intensity multiplier 146 may have the second value (e.g., zero). For example, if the filtered pixel change value 144 exceeds the second threshold 170, the intensity multiplier 146 may have the second value (e.g., zero).

The stability module 127 includes a disparity change computation engine 155 that (for each pixel) receives the proposed disparity 137 for the hypothesis 136 under evaluation for the current depth map 122a and the disparity 135 for the previous depth map 122b. In operation 157, the disparity change computation engine 155 computes the difference from the proposed disparity 137 of the current depth map 122a and the disparity 135 of the previous depth map 122b to obtain a disparity change value 158. In some examples, the disparity change value 158 is the absolute difference in disparity values. However, the stability module 127 may employ another technique (besides absolute difference) to derive the disparity change value.

In operation 159, the disparity change computation engine 155 applies a disparity function 178 to the disparity change value 158 to compute a disparity multiplier 164. In some examples, the disparity multiplier 164 is a value between zero and one. The disparity function 178 may be different than the intensity function 168.

FIG. 6D illustrates an example of the disparity function 178. In some examples, the disparity function 178 is the opposite of the intensity function 168. As shown in FIG. 6D, if the disparity change value 158 is relatively small, the disparity multiplier 164 may have a second value (e.g., zero). In some examples, if the disparity change value 158 is in a range of zero to a threshold 179, the disparity multiplier 164 may have the second value (e.g., zero). However, if the disparity change value 158 begins to exceed the threshold 179 towards a threshold 180, the disparity multiplier 164 may increase to a value between the second value (e.g., zero) and the first value (e.g., one). If the disparity change value 158 is relatively large, the disparity multiplier 164 may have the first value (e.g., one). For example, if the disparity change value 158 exceeds the threshold 180, the disparity multiplier 164 may have the first value (e.g., one). In some examples, the disparity change computation engine 155 sets the disparity multiplier 164 to the second value (e.g., zero) if the pixel was marked as invalid in the previous depth map 122b.

The stability module 127 includes a penalty calculator 166 that computes the stability penalty 128 based on the intensity multiplier 146, the disparity multiplier 164, and a maximum possible cost 165. For example, the penalty calculator 166 may compute the maximum possible cost 165 at a respective pixel that can be produced during the plane matching stage. In some examples, the maximum possible cost 165 is the maximum possible pre-stability total cost, where the maximum possible pre-stability total cost is the cost if all matching costs are as large as possible. In some examples, the maximum possible cost 165 is the maximum possible pre-stability total cost multiplied by an additional multiplier (e.g., a certain percentage of maximum possible pre-stability total cost), where the additional multiplier may affect the level of stability that is applied. In some examples, the additional multiplier is incorporated into the intensity function 168 and/or disparity function 178 (e.g., not to be between zero and one but between zero and a value less than one). The penalty calculator 166 may multiply the maximum possible cost 165 by the intensity multiplier 146, which is multiplied by the disparity multiplier 164, to compute the stability penalty 128 (e.g., the product of the maximum possible cost 165, the intensity multiplier 146, and the disparity multiplier 164). The stability penalty 128 is added to the filtered costs 194b during the plane evaluation stage.

The stability module 127 may reduce temporal flicker, and, in some examples, can also result in a more complete reconstruction. For example, when multiple approximate minima exist, the true minimum may be across successive frames but the location of the other minima is driven by noise so may move around. The false minima are often marked invalid in later post-processing, which results in the stability penalty 128 not being applied to that pixel having the false minima (e.g., the disparity multiplier will be zero). However, once the true minimum is selected, the pixel is not marked as invalid, which causes the real-time active stereo system 100 to encourage its selection in future frames.

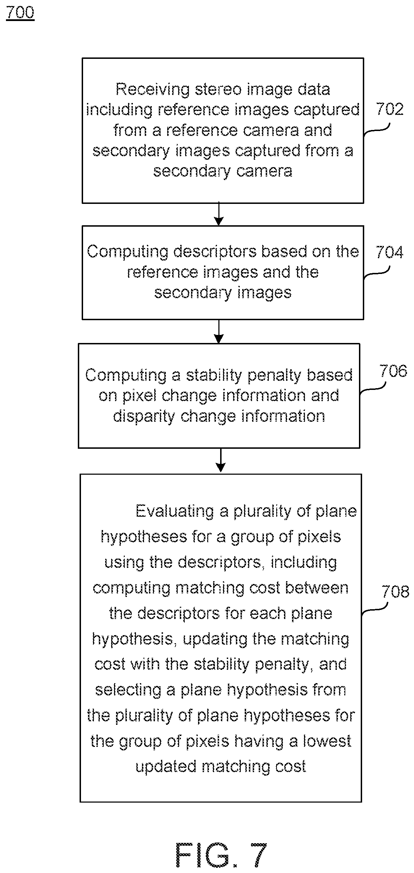

FIG. 7 illustrates a flowchart 700 depicting example operations of generating a depth map 122 in which filtered costs 194b are updated with a stability penalty 128 according to an aspect. Although the flowchart 700 of FIG. 7 illustrates the operations in sequential order, it will be appreciated that this is merely an example, and that additional or alternative operations may be included. Further, operations of FIG. 7 and related operations may be executed in a different order than that shown, or in a parallel or overlapping fashion.

Operation 702 includes receiving stereo image data 114 including reference images 130 captured from a reference stereo camera 108 and secondary images 132 captured from a secondary stereo camera 110. Operation 704 includes computing descriptors 121 based on the reference images 130 and the secondary images 132. Operation 706 includes computing a stability penalty 128 based on pixel change information 192 and disparity change information 199.

Operation 708 includes evaluating a plurality of plane hypotheses 136 for a group of pixels using the descriptors 121, including computing a matching cost 194 between the descriptors 121 for each plane hypothesis 136, updating the matching cost 194 with the stability penalty 128, and selecting a plane hypothesis 136 from the plurality of plane hypotheses 136 for the group of pixels having a lowest updated cost 194. In some examples, the matching costs 194 are filtered to obtain filtered costs 194b, where the filtered costs 194b are adjusted with the stability penalty 128.

Referring back to FIG. 1A, the depth sensing computing system 104 may include a confidence weight generator 185 configured to compute a confidence weight 182 associated with each depth estimate using a pixel variation value 184 and the raw cost 194a (e.g., the unfiltered costs). In some examples, the pixel variation value 184 is computed as the average of the absolute difference between pixel values in an image region and the mean pixel value in the image region. Stereo may not compute disparity accurately at every pixel in an image for a number of reasons including occlusions (e.g., a point might not be visible to both cameras), foreshortening on surfaces viewed at very oblique angles, and/or low signal (e.g., low reflectivity). However, the confidence weight generator 185 may compute confidence weights 182, which may be used when combining the depth map 122 with one or more other depth maps. For example, a system (e.g., a multi-view fusion system) may use the confidence weights 182 to down-weight or filter out pixel depth estimates having relatively low confidence weights 182.

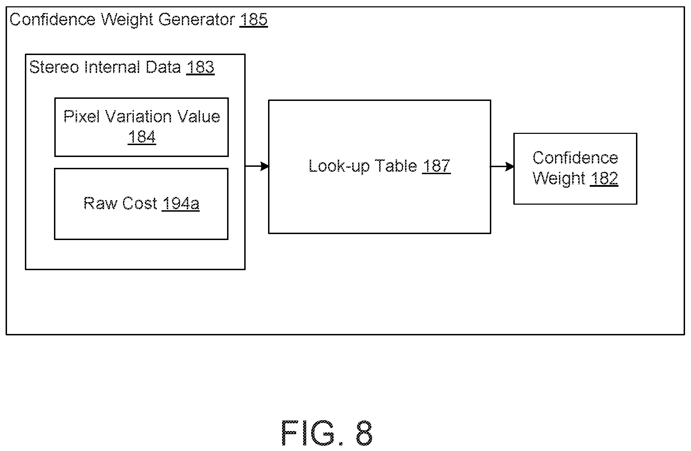

FIG. 8 illustrates a confidence weight generator 185 for generating a confidence weight 182 using stereo internal data 183 according to an aspect. The stereo internal data 183 may include a pixel variation value 184 and a cost 194. For example, the confidence weight generator 185 may generate a confidence weight 182 associated with the selected plane hypothesis 136 for the group of pixels based on the raw cost 194a and the pixel variation value 184. In other words, the confidence weight generator 185 may use stereo internal data 183 such as the raw costs 194a and the pixel variation values 184 to determine levels of accuracy associated with the depth estimates.

The confidence weight generator 185 may receive the raw cost 194a (e.g. not the filtered costs) associated with the selected plane hypothesis 136 and the pixel variation value 184 and compute the confidence weight 182 using a look-up table 187 inputted with the raw cost 194a and the pixel variation value 184. The pixel variation value 184 indicates the amount of pixel intensity change in the group of pixels over the spacetime window 150 associated with the descriptors 121. In some examples, the look-up table 187 may map confidence weights values to combinations of pixel variation values 184 and raw costs 194a, which has been created from image data of a scene with known geometry.

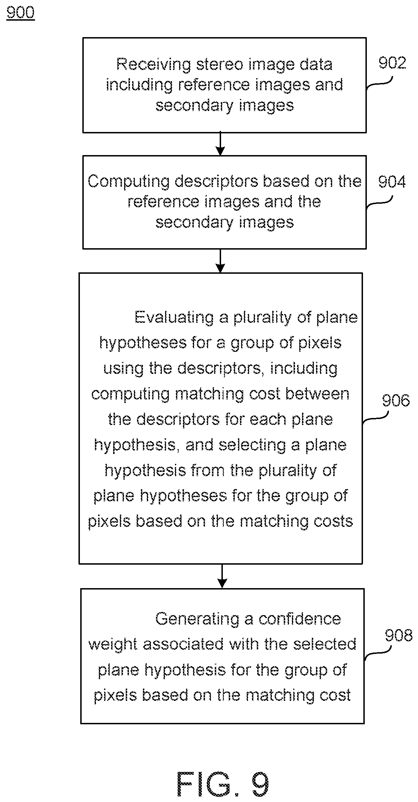

FIG. 9 illustrates a flowchart depicting example operations of generating a confidence weight 182 for each pixel's stereo depth estimate according to an aspect. Although the flowchart 900 of FIG. 9 illustrates the operations in sequential order, it will be appreciated that this is merely an example, and that additional or alternative operations may be included. Further, operations of FIG. 9 and related operations may be executed in a different order than that shown, or in a parallel or overlapping fashion.

Operation 902 includes receiving stereo image data 114 including reference images 130 and secondary images 132. Operation 904 includes computing descriptors 121 based on the reference images 130 and the secondary images 132.

Operation 906 includes evaluating a plurality of plane hypotheses 136 for a group of pixels using the descriptors 121, including computing a matching cost 194 between the descriptors 121 for each plane hypothesis 136, and selecting a plane hypothesis 136 from the plurality of plane hypotheses 136 for the group of pixels based on the matching costs 194. Operation 908 includes generating a confidence weight 182 associated with the selected plane hypothesis 136 for the group of pixels based on the matching cost 194.

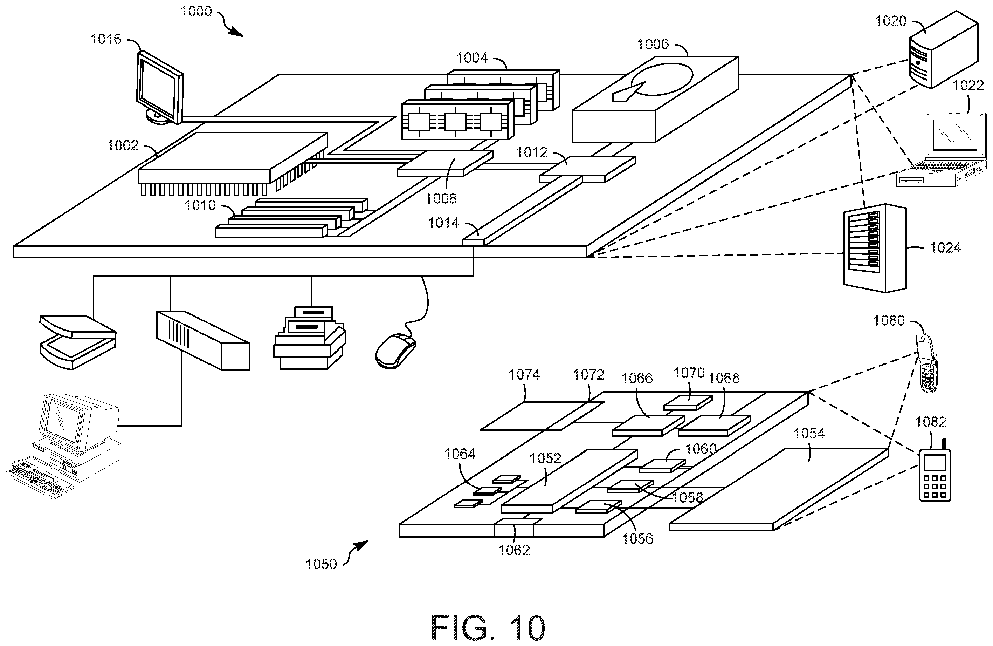

FIG. 10 shows an example of a computer device 1000 and a mobile computer device 1050, which may be used with the techniques described here. Computing device 1000 is intended to represent various forms of digital computers, such as laptops, desktops, workstations, personal digital assistants, servers, blade servers, mainframes, and other appropriate computers. Computing device 1050 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 1000 includes a processor 1002, memory 1004, a storage device 1006, a high-speed interface 1008 connecting to memory 1004 and high-speed expansion ports 1010, and a low speed interface 1012 connecting to low speed bus 1014 and storage device 1006. Each of the components 1002, 1004, 1006, 1008, 1010, and 1012, are interconnected using various busses, and may be mounted on a common motherboard or in other manners as appropriate. The processor 1002 can process instructions for execution within the computing device 1000, including instructions stored in the memory 1004 or on the storage device 1006 to display graphical information for a GUI on an external input/output device, such as display 1016 coupled to high speed interface 1008. In other implementations, multiple processors and/or multiple buses may be used, as appropriate, along with multiple memories and types of memory. Also, multiple computing devices 1000 may be connected, with each device providing portions of the necessary operations (e.g., as a server bank, a group of blade servers, or a multi-processor system).

The memory 1004 stores information within the computing device 1000. In one implementation, the memory 1004 is a volatile memory unit or units. In another implementation, the memory 1004 is a non-volatile memory unit or units. The memory 1004 may also be another form of computer-readable medium, such as a magnetic or optical disk.

The storage device 1006 is capable of providing mass storage for the computing device 1000. In one implementation, the storage device 1006 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 1004, the storage device 1006, or memory on processor 1002.

The high speed controller 1008 manages bandwidth-intensive operations for the computing device 1000, while the low speed controller 1012 manages lower bandwidth-intensive operations. Such allocation of functions is exemplary only. In one implementation, the high-speed controller 1008 is coupled to memory 1004, display 1016 (e.g., through a graphics processor or accelerator), and to high-speed expansion ports 1010, which may accept various expansion cards (not shown). In the implementation, low-speed controller 1012 is coupled to storage device 1006 and low-speed expansion port 1014. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 1000 may be implemented in a number of different forms, as shown in the figure. For example, it may be implemented as a standard server 1020, or multiple times in a group of such servers. It may also be implemented as part of a rack server system 1024. In addition, it may be implemented in a personal computer such as a laptop computer 1022. Alternatively, components from computing device 1000 may be combined with other components in a mobile device (not shown), such as device 1050. Each of such devices may contain one or more of computing device 1000, 1050, and an entire system may be made up of multiple computing devices 1000, 1050 communicating with each other.

Computing device 1050 includes a processor 1052, memory 1064, an input/output device such as a display 1054, a communication interface 1066, and a transceiver 1068, among other components. The device 1050 may also be provided with a storage device, such as a microdrive or other device, to provide additional storage. Each of the components 1050, 1052, 1064, 1054, 1066, and 1068, are interconnected using various buses, and several of the components may be mounted on a common motherboard or in other manners as appropriate.

The processor 1052 can execute instructions within the computing device 1050, including instructions stored in the memory 1064. The processor may be implemented as a chipset of chips that include separate and multiple analog and digital processors. The processor may provide, for example, for coordination of the other components of the device 1050, such as control of user interfaces, applications run by device 1050, and wireless communication by device 1050.

Processor 1052 may communicate with a user through control interface 1058 and display interface 1056 coupled to a display 1054. The display 1054 may be, for example, a TFT LCD (Thin-Film-Transistor Liquid Crystal Display) or an OLED (Organic Light Emitting Diode) display, or other appropriate display technology. The display interface 1056 may comprise appropriate circuitry for driving the display 1054 to present graphical and other information to a user. The control interface 1058 may receive commands from a user and convert them for submission to the processor 1052. In addition, an external interface 1062 may be provided in communication with processor 1052, to enable near area communication of device 1050 with other devices. External interface 1062 may provide, for example, for wired communication in some examples, or for wireless communication in other implementations, and multiple interfaces may also be used.

The memory 1064 stores information within the computing device 1050. The memory 1064 can be implemented as one or more of a computer-readable medium or media, a volatile memory unit or units, or a non-volatile memory unit or units. Expansion memory 1074 may also be provided and connected to device 1050 through expansion interface 1072, which may include, for example, a SIMM (Single In Line Memory Module) card interface. Such expansion memory 1074 may provide extra storage space for device 1050, or may also store applications or other information for device 1050. Specifically, expansion memory 1074 may include instructions to carry out or supplement the processes described above, and may include secure information also. Thus, for example, expansion memory 1074 may be provided as a security module for device 1050, and may be programmed with instructions that permit secure use of device 1050. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 1064, expansion memory 1074, or memory on processor 1052, that may be received, for example, over transceiver 1068 or external interface 1062.

Device 1050 may communicate wirelessly through communication interface 1066, which may include digital signal processing circuitry where necessary. Communication interface 1066 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 1068. In addition, short-range communication may occur, such as using a Bluetooth, Wi-Fi, or other such transceiver (not shown). In addition, GPS (Global Positioning System) receiver module 1070 may provide additional navigation- and location-related wireless data to device 1050, which may be used as appropriate by applications running on device 1050.

Device 1050 may also communicate audibly using audio codec 1060, which may receive spoken information from a user and convert it to usable digital information. Audio codec 1060 may likewise generate audible sound for a user, such as through a speaker, e.g., in a handset of device 1050. Such sound may include sound from voice telephone calls, may include recorded sound (e.g., voice messages, music files, etc.) and may also include sound generated by applications operating on device 1050. The computing device 1050 may be implemented in a number of different forms, as shown in the figure. For example, it may be implemented as a cellular telephone 1080. It may also be implemented as part of a smart phone 1082, personal digital assistant, or another similar mobile device.

In some examples, the real-time active stereo system 100 is included within a three-dimensional telepresence system. The three-dimensional telepresence system may provide a more realistic face-to-face experience than traditional videoconferencing systems without the use of head-mounted displays and 3-D glasses. Videoconferencing and image conferencing systems are some examples of telepresence systems.

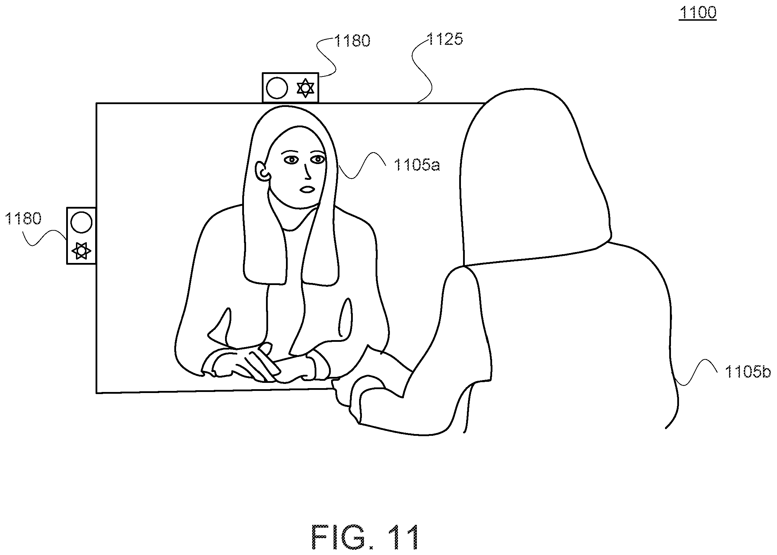

FIG. 11 illustrates a three-dimensional telepresence system 1100 according to an aspect. The three-dimensional telepresence system 1100 may be configured to execute the depth sensing computing system 104 according to the techniques described herein.

Two users 1105a and 1105b can use the three-dimensional telepresence system 1100 to communicate remotely but still face-to-face. A first user 1105a is at a remote location from a second user 1105b. The second user 1105b sees a three-dimensional graphic image of the first user 1105a on a display 1125. In some examples, the display 1125 is at a distance from the second user 1105b and of an appropriate size to simulate co-presence of the first user 1105a and the second user 1105b. For example, the display 1125 may be positioned 1 m across the table from second user 1105b, and the display 1125 may be a 1 m display. A camera assembly 1180 can be configured to capture visible light and infrared light (e.g., the stereo image data 114) which can be used by the three-dimensional telepresence system 1100 (e.g., by the terminal used by second user 1105b) to display a three-dimensional stereoscopic image of the second user 1105b on a display viewable by first user 1105a (which is not shown in FIG. 11). In some examples, the camera assembly 1180 includes the capture system 102. In some examples, one or more microphones and/or speakers (e.g., speaker arrays) can be included in the system 1100. In such systems 1100, the microphone(s) and/or speaker(s) can be used to simulate spatial audio (e.g., sounds being produced spatially dependent on location of origin).

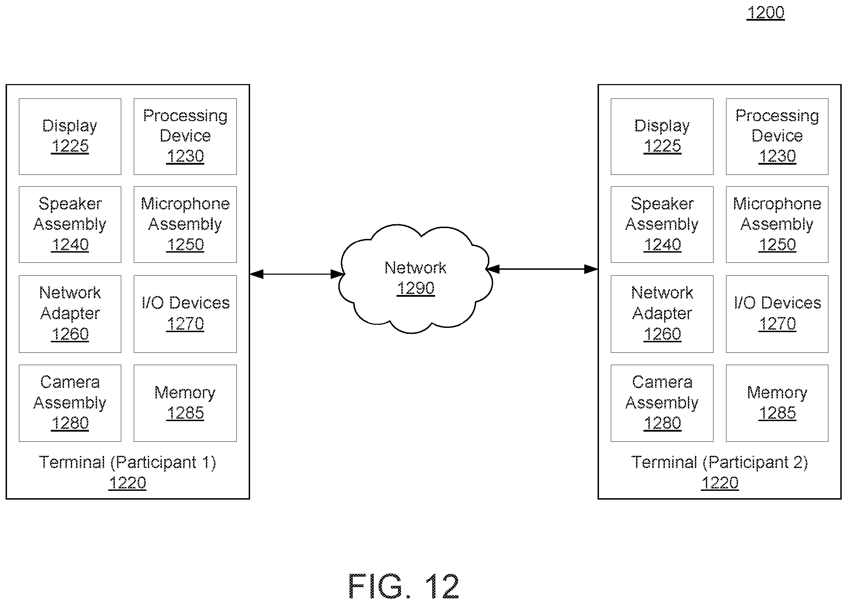

FIG. 12 illustrates, in block form, the three-dimensional telepresence system 1200 for conducting three-dimensional video conferencing between two users according to an aspect. In some examples, each terminal 1220, corresponding to respective users (e.g., a first participant and a second participant) can communicate using a network 1290.

The three-dimensional telepresence system 1200 can be computerized, where each of the illustrated components includes a computing device, or part of a computing device, that is configured to communicate with other computing devices via the network 1290. For example, each terminal 1220 can include one or more computing devices, such as a desktop, notebook, or handheld computing device that is configured to transmit and receive data to/from other computing devices via the network 1290. In some examples, each terminal 1220 may be a special purpose teleconference device where each component of the terminal 1220 is disposed within the same housing. In some examples, communication between each terminal 1220 may be facilitated by one or more servers or computing clusters (not shown) which manage conferencing set-up, tear down, and/or scheduling. In some examples, the terminals 1220 may communicate using point-to-point communication protocols.

The terminal 1220 can be used by participants in a videoconference. In some examples, the participants use identical terminals. For example, each participant may use the same model number of terminal 1220 with the same configuration or specification, or terminals 1220 that have been configured in a similar way to facilitate communication during the video conference. In some examples, terminals used by participants may differ but are each configured to send and receive image and depth data (e.g., the depth maps 122) and generate three-dimensional stereoscopic images without the use of head-mounted displays or three-dimensional glasses. For ease of discussion, the example of FIG. 12 presents identical terminals 1220 on both ends of the three-dimensional telepresence system 1200.

The terminal 1220 includes a display 1225, a camera assembly 1280, and a processing device 1230. In some examples, the display 1225 can include a glasses-free lenticular three-dimensional display. The camera assembly 1280 may include the capture system 102. The processing device 1230 may include the depth sensing computing system 104.

The processing device 1230 may perform functions and operations to command (e.g., trigger) the display 1225 to display images. In some examples, the processing device 1230 may be in communication with the camera assembly 1280 to receive the stereo image data 114, and the processing device 1230 is configured to execute the local stereo reconstruction algorithm 120 based on the stereo image data 114 in order to generate the depth maps 122 according to the techniques discussed herein. The processing device 1230 may also be in communication with a network adapter 1260 to receive image data and depth data (e.g., the depth maps 122) from other terminals 1220 participating in a videoconference. The processing device 1230 may use the position and location data received from the camera assembly 1280 and the image data and depth data from the network adapter 1260 to render three-dimensional stereoscopic images on the display 1225. In some examples, the processing device 1230 may compress or encode the image data and/or depth data so that it requires less memory or bandwidth before it communicates the image data or the depth data over the network 1290. Likewise, the processing device 1230 may decompress or decode received image data or depth data before the processing device 1230 renders stereoscopic three-dimensional images.

According to some examples, the terminal 1220 can include a speaker assembly 1240 and a microphone assembly 1250. The speaker assembly 1240 may project audio corresponding to audio data received from other terminals 1220 in a videoconference. The speaker assembly 1240 may include one or more speakers that can be positioned in multiple locations to, for example, project directional audio. The microphone assembly 1250 may capture audio corresponding to a user of the terminal 1220. The microphone assembly 1250 may include one or more speakers that can be positioned in multiple locations to, for example, project directional audio. In some examples, a processing unit (e.g., processing device 1230) may compress or encode audio captured by the microphone assembly 1250 and communicated to other terminals 1220 participating in the videoconference via the network adapter 1260 and the network 1290.

The terminal 1220 can also include I/O devices 1270. The I/O devices 1270 can include input and/or output devices for controlling the videoconference in which the terminal 1220 is participating. For example, the I/O devices 1270 can include buttons or touch screens which can be used to adjust contrast, brightness, or zoom of the display 1225. The I/O devices 1270 can also include a keyboard interface which may be used to annotate images rendered on the display 1225, or annotations to communicate to other terminals 1220 participating in a videoconference.

The terminal 1220 may include memory 1285. The memory 1285 may be a volatile memory unit or units or nonvolatile memory units or units depending on the implementation. The memory 1285 may be any form of computer readable medium such as a magnetic or optical disk, or solid-state memory. The memory 1285 may store instructions that cause the processing device 1230 to perform functions and operations consistent with disclosed examples.

The terminals 1220 of the three-dimensional telepresence system 1200 communicate various forms of data between each other to facilitate videoconferencing. In some examples, the terminals 1220 may communicate image data, depth data (e.g., the depth maps 122), audio data, and/or location data corresponding to each respective user of the terminal 1220. The processing device 1230 of each terminal 1220 may use received image data, depth data, and/or location data to render stereoscopic three-dimensional images on the display 1225. The processing device 1230 can interpret audio data to command the speaker assembly 1240 to project audio corresponding to the audio data. In some examples, the image data, depth data, audio data, and/or location data may be compressed or encoded and the processing device 1230 may perform functions and operations to decompress or decode the data.

Depending on the implementation, the network 1290 can include one or more of any type of network, such as one or more local area networks, wide area networks, personal area networks, telephone networks, and/or the Internet, which can be accessed via any available wired and/or wireless communication protocols. For example, the network 1290 can include an Internet connection through which each terminal 1220 communicates. Any other combination of networks, including secured and unsecured network communication links are contemplated for use in the systems described herein.

While example embodiments may include various modifications and alternative forms, embodiments thereof are shown by way of example in the drawings and are described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. Various implementations of the systems and techniques described here can be realized as and/or generally be referred to herein as a circuit, a module, a block, or a system that can combine software and hardware aspects. For example, a module may include the functions/acts/computer program instructions executing on a processor (e.g., a processor formed on a silicon substrate, a GaAs substrate, and the like) or some other programmable data processing apparatus.

Some of the above example embodiments are described as processes or methods depicted as flowcharts. Although the flowcharts describe the operations as sequential processes, many of the operations may be performed in parallel, concurrently or simultaneously. In addition, the order of operations may be rearranged. The processes may be terminated when their operations are completed but may also have additional steps not included in the figure. The processes may correspond to methods, functions, procedures, subroutines, subprograms, etc.

Methods discussed above, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks.

Specific structural and functional details disclosed herein are merely representative for purposes of describing example embodiments. Example embodiments, however, be embodied in many alternate forms and should not be construed as limited to only the embodiments set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term and/or includes any and all combinations of one or more of the associated listed items.

It will be understood that when an element is referred to as being connected or coupled to another element, it can be directly connected or coupled to the other element or intervening elements may be present. In contrast, when an element is referred to as being directly connected or directly coupled to another element, there are no intervening elements present. Other words used to describe the relationship between elements should be interpreted in a like fashion (e.g., between versus directly between, adjacent versus directly adjacent, etc.).

The terminology used herein is for the purpose of describing particular embodiments only and is not intended to be limiting of example embodiments. As used herein, the singular forms a, an, and the are intended to include the plural forms as well, unless the context clearly indicates otherwise. It will be further understood that the terms comprises, comprising, includes and/or including, when used herein, specify the presence of stated features, integers, steps, operations, elements and/or components, but do not preclude the presence or addition of one or more other features, integers, steps, operations, elements, components and/or groups thereof.

It should also be noted that in some alternative implementations, the functions/acts noted may occur out of the order noted in the figures. For example, two figures shown in succession may in fact be executed concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of the above example embodiments and corresponding detailed description are presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the above illustrative embodiments, reference to acts and symbolic representations of operations (e.g., in the form of flowcharts) that may be implemented as program modules or functional processes include routines, programs, objects, components, data structures, etc., that perform particular tasks or implement particular abstract data types and may be described and/or implemented using existing hardware at existing structural elements. Such existing hardware may include one or more Central Processing Units (CPUs), digital signal processors (DSPs), application-specific-integrated-circuits, field programmable gate arrays (FPGAs) computers or the like.

It should be borne in mind, however, that all of these and similar terms are to be associated with the appropriate physical quantities and are merely convenient labels applied to these quantities. Unless specifically stated otherwise, or as is apparent from the discussion, terms such as processing or computing or calculating or determining of displaying or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the example embodiments are typically encoded on some form of non-transitory program storage medium or implemented over some type of transmission medium. The program storage medium may be magnetic (e.g., a floppy disk or a hard drive) or optical (e.g., a compact disk read only memory, or CD ROM), and may be read only or random access. Similarly, the transmission medium may be twisted wire pairs, coaxial cable, optical fiber, or some other suitable transmission medium known to the art. The example embodiments are not limited by these aspects of any given implementation.

The scope of protection is solely defined by the appended claims.

## Claims

1. A real-time active stereo system (100) comprising:
a capture system (102) configured to capture stereo image data (114), the stereo image data (114) including reference images (130) and secondary images (132); and
a depth sensing computing system (104) configured to generate a depth map (122), the depth sensing computing system (104) configured to:
compute descriptors based on the reference images (130) and the secondary images (132);
compute a stability penalty (128) based on pixel change information and disparity change information; and
evaluate a plurality of plane hypotheses for a group of pixels using the descriptors, including:
compute matching cost between the descriptors associated with each plane hypothesis;
update the matching cost with the stability penalty (128); and
select a plane hypothesis from the plurality of plane hypotheses for the group of pixels based on the updated matching cost,
wherein the pixel change information includes a pixel change value (142) indicating an intensity change of the pixel and the disparity change information includes a disparity change value (158), the depth sensing computing system (104) configured to:
compute an intensity multiplier (146) using the pixel change value (142);
compute a disparity multiplier (164) using the disparity change value (158); and
compute the stability penalty (128) using the intensity multiplier (146) and the disparity multiplier (164),
wherein the pixel change value (142) represents a difference between a pixel value of a pixel in a reference image (130) or a secondary image (132) for a current depth map (122a) and a pixel value of the pixel in a reference image (130) or a secondary image (132) for a previous depth map (122b).

2. The real-time active stereo system (100) of claim 1, wherein the depth sensing computing system (104) is configured to:
apply an edge-aware filter (196) to the pixel change value (142) to derive a filtered pixel change value (144), the filtered pixel change value (144) being used to compute the intensity multiplier (146).

3. The real-time active stereo system (100) of claim 1 or 2, wherein the disparity change value (158) represents a difference between a proposed disparity of a pixel for the current depth map (122a) and a disparity of the pixel for the previous depth map (122b).

4. The real-time active stereo system (100) of any of claims 1 o 3, wherein the depth sensing computing system (104) is configured to:
compute a maximum matching cost that can be produced during plane hypothesis evaluation; and
compute the stability penalty (128) based on a product of the maximum matching cost, the intensity multiplier (146), and the disparity multiplier (164).

5. The real-time active stereo system (100) of any of claims 1 to 4, wherein the depth sensing computing system (104) is configured to compute the intensity multiplier (146) using an intensity function inputted with the pixel change value (142).

6. The real-time active stereo system (100) of any of claims 1 to 5, wherein the depth sensing computing system (104) is configured to compute the disparity multiplier (164) using a disparity function inputted with the pixel change value (142).

7. The real-time active stereo system (100) of any of claims 1 to 6, wherein the depth sensing computing system (104) is configured to:
filter the matching cost using an edge-aware filter (196), wherein the filtered matching cost is updated with the stability penalty (128).

8. A method for real-time active stereo comprising:
receiving stereo image data (114) including reference images (130) captured from a reference camera (108) and secondary images (132) captured from a secondary camera (110);
computing descriptors based on the reference images (130) and the secondary images (132);
computing a stability penalty (128) based on pixel change information and disparity change information; and
evaluating a plurality of plane hypotheses for a group of pixels using the descriptors, including:
computing matching cost between the descriptors associated with each plane hypothesis;
updating the matching cost with the stability penalty (128); and
selecting a plane hypothesis from the plurality of plane hypotheses for the group of pixels having a lowest updated matching cost,
wherein the pixel change information includes a pixel change value (142) indicating an intensity change of the pixel and the disparity change information includes a disparity change value (158), the method further comprising:
computing an intensity multiplier (146) using the pixel change value (142);
computing a disparity multiplier (164) using the disparity change value (158);
computing the stability penalty (128) using the intensity multiplier (146) and the disparity multiplier (164), and
wherein the pixel change value (142) represents a difference from a pixel value of a pixel in a reference image (130) for a current depth map (122a) and a pixel value of the pixel in a reference image (130) for a previous depth map (122b).

9. The method of claim 8, further comprising:
applying an edge-aware filter (196) to the pixel change value (142) to derive a filtered pixel change value (144), the filtered pixel change value (144) being used to compute the intensity multiplier (146).

10. The method of claim 8 or 9, wherein the disparity change value (158) represents a difference between a proposed disparity of a pixel for the current depth map (122a) and a disparity of the pixel for the previous depth map (122b).

11. The method of any of claims 8 to 10, further comprising:
computing a maximum matching cost that can be produced during plane hypothesis evaluation; and
computing the stability penalty (128) based on a product of the maximum matching cost, the intensity multiplier (146), and the disparity multiplier (164).

12. The method of any of claims 8 to 11, further comprising:
computing the intensity multiplier (146) using an intensity function inputted with the pixel change value (142); and
computing the disparity multiplier (164) using a disparity function inputted with the pixel change value (142), the disparity function being different than the intensity function.

13. The method of any of claims 8 to 12, further comprising:
computing the matching cost based on Hamming distances between the descriptors; and
filtering the matching cost using an edge-aware filter (196), wherein the filtered matching cost are updated with the stability penalty (128).

14. A non-transitory computer-readable medium (118) storing executable instructions that when executed by at least one processor (116) are configured to cause the at least one processor (116) to:
receive stereo image data (114) including reference images (130) captured from a reference camera (108) and secondary images (132) captured from a secondary camera (110);
compute descriptors based on the reference images (130) and the secondary images (132);
compute a stability penalty (128) based on pixel change information and disparity change information; and
evaluate a plurality of plane hypotheses for a group of pixels using the descriptors, including:
compute matching cost between the descriptors for each plane hypothesis;
update the matching cost with the stability penalty (128); and
select a plane hypothesis from the plurality of plane hypotheses for the group of pixels based on the updated matching costs,
wherein the pixel change information includes a pixel change value (142) indicating an intensity change of the pixel and the disparity change information includes a disparity change value (158), the executable instructions including instructions that when executed by the at least one processor (116) cause the at least one processor (116) to:
compute an intensity multiplier (146) using the filtered pixel change value (144);
compute a disparity multiplier (164) using the disparity change value (158); and
compute the stability penalty (128) using the intensity multiplier (146) and the disparity multiplier (164),
wherein the pixel change value (142) represents a difference from a pixel value of a pixel in a reference image (130) for a current depth map (122a) and a pixel value of the pixel in a reference image (130) for a previous depth map (122b).

15. The non-transitory computer-readable medium (118) of claim 14, wherein the executable instructions include instructions that when executed by the at least one processor (116) cause the at least one processor (116) to perform the method of any one of claims 9 to 13.

## Patentansprüche

1. Aktives Echtzeit-Stereosystem (100), umfassend:
ein Erfassungssystem (102), das konfiguriert ist, Stereo-Bilddaten (114) zu erfassen, wobei die Stereo-Bilddaten (114) Referenzbilder (130) und Sekundärbilder (132) beinhalten; und
ein Tiefenmess-Computersystem (104), das konfiguriert ist, eine Tiefenkarte (122) zu erzeugen, wobei das Tiefenmess-Computersystem (104) konfiguriert ist zum:
Berechnen von Deskriptoren basierend auf den Referenzbildern (130) und den Sekundärbildern (132);
Berechnen einer Stabilitätsstrafe (128) basierend auf Pixeländerungsinformationen und Disparitätsänderungsinformationen; und
Auswerten einer Vielzahl von Ebenenhypothesen für eine Gruppe von Pixeln unter Verwendung der Deskriptoren, beinhaltend:
Berechnen von Übereinstimmungskosten zwischen den Deskriptoren, die mit jeder Ebenenhypothese assoziiert sind;
Aktualisieren der Übereinstimmungskosten mit der Stabilitätsstrafe (128); und
Auswählen einer Ebenenhypothese aus der Vielzahl von Ebenenhypothesen für die Gruppe von Pixeln basierend auf den aktualisierten Übereinstimmungskosten,
wobei die Pixeländerungsinformationen einen Pixeländerungswert (142) beinhalten, der eine Intensitätsänderung des Pixels angibt, und die Disparitätsänderungsinformationen einen Disparitätsänderungswert (158) beinhalten, wobei das Tiefenmess-Computersystem (104) konfiguriert ist zum:
Berechnen eines Intensitätsmultiplikators (146) unter Verwendung des Pixeländerungswerts (142);
Berechnen eines Disparitätsmultiplikators (164) unter Verwendung des Disparitätsänderungswerts (158); und
Berechnen der Stabilitätsstrafe (128) unter Verwendung des Intensitätsmultiplikators (146) und des Disparitätsmultiplikators (164),
wobei der Pixeländerungswert (142) eine Differenz zwischen einem Pixelwert eines Pixels in einem Referenzbild (130) oder einem Sekundärbild (132) für eine aktuelle Tiefenkarte (122a) und einem Pixelwert des Pixels in einem Referenzbild (130) oder einem Sekundärbild (132) für eine vorherige Tiefenkarte (122b) darstellt.

2. Aktives Echtzeit-Stereosystem (100) nach Anspruch 1, wobei das Tiefenmess-Computersystem (104) konfiguriert ist zum:
Anwenden eines Edge-Aware-Filters (196) auf den Pixeländerungswert (142), um einen gefilterten Pixeländerungswert (144) abzuleiten, wobei der gefilterte Pixeländerungswert (144) verwendet wird, um den Intensitätsmultiplikator (146) zu berechnen.

3. Aktives Echtzeit-Stereosystem (100) nach Anspruch 1 oder 2, wobei der Disparitätsänderungswert (158) eine Differenz zwischen einer vorgeschlagenen Disparität eines Pixels für die aktuelle Tiefenkarte (122a) und einer Disparität des Pixels für die vorherige Tiefenkarte (122b) darstellt.

4. Aktives Echtzeit-Stereosystem (100) nach einem der Ansprüche 1 o 3, wobei das Tiefenmess-Computersystem (104) konfiguriert ist zum:
Berechnen von maximalen Übereinstimmungskosten, die während der Auswertung von Ebenenhypothesen produziert werden können; und
Berechnen der Stabilitätsstrafe (128) basierend auf einem Produkt aus den maximalen Übereinstimmungskosten, dem Intensitätsmultiplikator (146) und dem Disparitätsmultiplikator (164).

5. Aktives Echtzeit-Stereosystem (100) nach einem der Ansprüche 1 bis 4, wobei das Tiefenmess-Computersystem (104) konfiguriert ist, den Intensitätsmultiplikator (146) unter Verwendung einer Intensitätsfunktion zu berechnen, in die der Pixeländerungswert (142) eingegeben wird.

6. Aktives Echtzeit-Stereosystem (100) nach einem der Ansprüche 1 bis 5, wobei das Tiefenmess-Computersystem (104) konfiguriert ist, den Disparitätsmultiplikator (164) unter Verwendung einer Disparitätsfunktion zu berechnen, in die der Pixeländerungswert (142) eingegeben wird.

7. Aktives Echtzeit-Stereosystem (100) nach einem der Ansprüche 1 bis 6, wobei das Tiefenmess-Computersystem (104) konfiguriert ist zum:
Filtern der Übereinstimmungskosten unter Verwendung eines Edge-Aware-Filters (196), wobei die gefilterten Übereinstimmungskosten mit der Stabilitätsstrafe (128) aktualisiert werden.

8. Verfahren für aktives Echtzeit-Stereo, umfassend:
Empfangen von Stereo-Bilddaten (114), die Referenzbilder (130), die von einer Referenzkamera (108) erfasst wurden, und Sekundärbilder (132), die von einer Sekundärkamera (110) erfasst wurden, beinhalten;
Berechnen von Deskriptoren basierend auf den Referenzbildern (130) und den Sekundärbildern (132);
Berechnen einer Stabilitätsstrafe (128) basierend auf Pixeländerungsinformationen und Disparitätsänderungsinformationen; und
Auswerten einer Vielzahl von Ebenenhypothesen für eine Gruppe von Pixeln unter Verwendung der Deskriptoren, beinhaltend:
Berechnen von Übereinstimmungskosten zwischen den Deskriptoren, die mit jeder Ebenenhypothese assoziiert sind;
Aktualisieren der Übereinstimmungskosten mit der Stabilitätsstrafe (128); und
Auswählen einer Ebenenhypothese aus der Vielzahl von Ebenenhypothesen für die Gruppe von Pixeln, die die niedrigsten aktualisierten Übereinstimmungskosten aufweist,
wobei die Pixeländerungsinformationen einen Pixeländerungswert (142) beinhalten, der eine Intensitätsänderung des Pixels angibt, und die Disparitätsänderungsinformationen einen Disparitätsänderungswert (158) beinhalten, wobei das Verfahren ferner umfasst:
Berechnen eines Intensitätsmultiplikators (146) unter Verwendung des Pixeländerungswerts (142);
Berechnen eines Disparitätsmultiplikators (164) unter Verwendung des Disparitätsänderungswerts (158);
Berechnen der Stabilitätsstrafe (128) unter Verwendung des Intensitätsmultiplikators (146) und des Disparitätsmultiplikators (164), und
wobei der Pixeländerungswert (142) eine Differenz zu einem Pixelwert eines Pixels in einem Referenzbild (130) für eine aktuelle Tiefenkarte (122a) und einem Pixelwert des Pixels in einem Referenzbild (130) für eine vorherige Tiefenkarte (122b) darstellt.

9. Verfahren nach Anspruch 8, ferner umfassend:
Anwenden eines Edge-Aware-Filters (196) auf den Pixeländerungswert (142), um einen gefilterten Pixeländerungswert (144) abzuleiten, wobei der gefilterte Pixeländerungswert (144) verwendet wird, um den Intensitätsmultiplikator (146) zu berechnen.

10. Verfahren nach Anspruch 8 oder 9, wobei der Disparitätsänderungswert (158) eine Differenz zwischen einer vorgeschlagenen Disparität eines Pixels für die aktuelle Tiefenkarte (122a) und einer Disparität des Pixels für die vorherige Tiefenkarte (122b) darstellt.

11. Verfahren nach einem der Ansprüche 8 bis 10, ferner umfassend:
Berechnen von maximalen Übereinstimmungskosten, die während der Auswertung von Ebenenhypothesen produziert werden können; und
Berechnen der Stabilitätsstrafe (128) basierend auf einem Produkt aus den maximalen Übereinstimmungskosten, dem Intensitätsmultiplikator (146) und dem Disparitätsmultiplikator (164).

12. Verfahren nach einem der Ansprüche 8 bis 11, ferner umfassend:
Berechnen des Intensitätsmultiplikators (146) unter Verwendung einer Intensitätsfunktion, in die der Pixeländerungswert (142) eingegeben wird; und
Berechnen des Disparitätsmultiplikators (164) unter Verwendung einer Disparitätsfunktion, in die der Pixeländerungswert (142) eingegeben wird, wobei sich die Disparitätsfunktion von der Intensitätsfunktion unterscheidet.

13. Verfahren nach einem der Ansprüche 8 bis 12, ferner umfassend:
Berechnen der Übereinstimmungskosten basierend auf Hamming-Distanzen zwischen den Deskriptoren; und
Filtern der Übereinstimmungskosten unter Verwendung eines Edge-Aware-Filters (196), wobei die gefilterten Übereinstimmungskosten mit der Stabilitätsstrafe (128) aktualisiert werden.

14. Nichtflüchtiges computerlesbares Medium (118), das ausführbare Anweisungen speichert, die, wenn sie durch mindestens einen Prozessor (116) ausgeführt werden, konfiguriert sind, den mindestens einen Prozessor (116) zu veranlassen zum:
Empfangen von Stereo-Bilddaten (114), die Referenzbilder (130), die von einer Referenzkamera (108) erfasst wurden, und Sekundärbilder (132), die von einer Sekundärkamera (110) erfasst wurden, beinhalten;
Berechnen von Deskriptoren basierend auf den Referenzbildern (130) und den Sekundärbildern (132);
Berechnen einer Stabilitätsstrafe (128) basierend auf Pixeländerungsinformationen und Disparitätsänderungsinformationen; und
Auswerten einer Vielzahl von Ebenenhypothesen für eine Gruppe von Pixeln unter Verwendung der Deskriptoren, beinhaltend:
Berechnen von Übereinstimmungskosten zwischen den Deskriptoren für jede Ebenenhypothese;
Aktualisieren der Übereinstimmungskosten mit der Stabilitätsstrafe (128); und
Auswählen einer Ebenenhypothese aus der Vielzahl von Ebenenhypothesen für die Gruppe von Pixeln basierend auf den aktualisierten Übereinstimmungskosten,
wobei die Pixeländerungsinformationen einen Pixeländerungswert (142) beinhalten, der eine Intensitätsänderung des Pixels angibt, und die Disparitätsänderungsinformationen einen Disparitätsänderungswert (158) beinhalten, wobei die ausführbaren Anweisungen Anweisungen beinhalten, die, wenn sie durch den mindestens einen Prozessor (116) ausgeführt werden, den mindestens einen Prozessor (116) veranlassen zum:
Berechnen eines Intensitätsmultiplikators (146) unter Verwendung des gefilterten Pixeländerungswerts (144);
Berechnen eines Disparitätsmultiplikators (164) unter Verwendung des Disparitätsänderungswerts (158); und
Berechnen der Stabilitätsstrafe (128) unter Verwendung des Intensitätsmultiplikators (146) und des Disparitätsmultiplikators (164),
wobei der Pixeländerungswert (142) eine Differenz zu einem Pixelwert eines Pixels in einem Referenzbild (130) für eine aktuelle Tiefenkarte (122a) und einem Pixelwert des Pixels in einem Referenzbild (130) für eine vorherige Tiefenkarte (122b) darstellt.

15. Nichtflüchtiges computerlesbares Medium (118) nach Anspruch 14, wobei die ausführbaren Anweisungen Anweisungen beinhalten, die, wenn sie durch den mindestens einen Prozessor (116) ausgeführt werden, den mindestens einen Prozessor (116) veranlassen, das Verfahren nach einem der Ansprüche 9 bis 13 durchzuführen.

## Revendications

1. Système stéréo actif en temps réel (100) comprenant :
un système de capture (102) configuré pour capturer des données d'image stéréo (114), les données d'image stéréo (114) comportant des images de référence (130) et des images secondaires (132) ; et
un système informatique de détection de profondeur (104) configuré pour générer une carte de profondeur (122), le système informatique de détection de profondeur (104) étant configuré pour :
calculer des descripteurs sur la base des images de référence (130) et des images secondaires (132) ;
calculer une pénalité de stabilité (128) sur la base d'informations de changement de pixel et d'informations de changement de disparité ; et
évaluer une pluralité d'hypothèses de plan pour un groupe de pixels à l'aide des descripteurs, notamment :
calculer le coût de mise en correspondance entre les descripteurs associés à chaque hypothèse de plan ;
mettre à jour le coût de mise en correspondance avec la pénalité de stabilité (128) ; et
sélectionner une hypothèse de plan parmi la pluralité d'hypothèses de plan pour le groupe de pixels sur la base du coût de mise en correspondance mis à jour,
dans lequel les informations de changement de pixel comportent une valeur de changement de pixel (142) indiquant un changement d'intensité du pixel et les informations de changement de disparité comportent une valeur de changement de disparité (158), le système informatique de détection de profondeur (104) étant configuré pour :
calculer un multiplicateur d'intensité (146) à l'aide de la valeur de changement de pixel (142) ;
calculer un multiplicateur de disparité (164) à l'aide de la valeur de changement de disparité (158) ; et
calculer la pénalité de stabilité (128) à l'aide du multiplicateur d'intensité (146) et du multiplicateur de disparité (164),
dans lequel la valeur de changement de pixel (142) représente une différence entre une valeur de pixel d'un pixel dans une image de référence (130) ou une image secondaire (132) pour une carte de profondeur actuelle (122a) et une valeur de pixel du pixel dans une image de référence (130) ou une image secondaire (132) pour une carte de profondeur précédente (122b).

2. Système stéréo actif en temps réel (100) selon la revendication 1, dans lequel le système informatique de détection de profondeur (104) est configuré pour :
appliquer un filtre sensible aux contours (196) à la valeur de changement de pixel (142) pour obtenir une valeur de changement de pixel filtrée (144), la valeur de changement de pixel filtrée (144) étant utilisée pour calculer le multiplicateur d'intensité (146).

3. Système stéréo actif en temps réel (100) selon la revendication 1 ou 2, dans lequel la valeur de changement de disparité (158) représente une différence entre une disparité proposée d'un pixel pour la carte de profondeur actuelle (122a) et une disparité du pixel pour la carte de profondeur précédente (122b).

4. Système stéréo actif en temps réel (100) selon l'une quelconque des revendications 1 à 3, dans lequel le système informatique de détection de profondeur (104) est configuré pour :
calculer un coût de mise en correspondance maximal pouvant être produit lors de l'évaluation d'hypothèse de plan ; et
calculer la pénalité de stabilité (128) sur la base d'un produit du coût de mise en correspondance maximal, du multiplicateur d'intensité (146) et du multiplicateur de disparité (164).

5. Système stéréo actif en temps réel (100) selon l'une quelconque des revendications 1 à 4, dans lequel le système informatique de détection de profondeur (104) est configuré pour calculer le multiplicateur d'intensité (146) à l'aide d'une fonction d'intensité entrée avec la valeur de changement de pixel (142).

6. Système stéréo actif en temps réel (100) selon l'une quelconque des revendications 1 à 5, dans lequel le système informatique de détection de profondeur (104) est configuré pour calculer le multiplicateur de disparité (164) à l'aide d'une fonction de disparité entrée avec la valeur de changement de pixel (142).

7. Système stéréo actif en temps réel (100) selon l'une quelconque des revendications 1 à 6, dans lequel le système informatique de détection de profondeur (104) est configuré pour :
filtrer le coût de mise en correspondance à l'aide d'un filtre sensible aux bords (196), dans lequel le coût de mise en correspondance filtré est mis à jour avec la pénalité de stabilité (128) .

8. Procédé de stéréo active en temps réel comprenant :
la réception de données d'images stéréo (114) comportant des images de référence (130) capturées à partir d'une caméra de référence (108) et des images secondaires (132) capturées à partir d'une caméra secondaire (110) ;
le calcul de descripteurs sur la base des images de référence (130) et des images secondaires (132) ;
le calcul d'une pénalité de stabilité (128) sur la base d'informations de changement de pixel et d'informations de changement de disparité ; et
l'évaluation d'une pluralité d'hypothèses de plan pour un groupe de pixels à l'aide des descripteurs, notamment :
le calcul du coût de mise en correspondance entre les descripteurs associés à chaque hypothèse de plan ;
la mise à jour du coût de mise en correspondance avec la pénalité de stabilité (128) ; et
la sélection d'une hypothèse de plan parmi la pluralité d'hypothèses de plan pour le groupe de pixels ayant le coût de mise en correspondance mis à jour le plus bas,
dans lequel les informations de changement de pixel comportent une valeur de changement de pixel (142) indiquant un changement d'intensité du pixel et les informations de changement de disparité comportent une valeur de changement de disparité (158), le procédé comprenant en outre :
le calcul d'un multiplicateur d'intensité (146) à l'aide de la valeur de changement de pixel (142) ;
le calcul d'un multiplicateur de disparité (164) à l'aide de la valeur de changement de disparité (158) ;
le calcul de la pénalité de stabilité (128) à l'aide du multiplicateur d'intensité (146) et du multiplicateur de disparité (164), et
dans lequel la valeur de changement de pixel (142) représente une différence entre une valeur de pixel d'un pixel dans une image de référence (130) pour une carte de profondeur actuelle (122a) et une valeur de pixel du pixel dans une image de référence (130) pour une carte de profondeur précédente (122b).

9. Procédé selon la revendication 8, comprenant en outre :
l'application d'un filtre sensible aux contours (196) à la valeur de changement de pixel (142) pour obtenir une valeur de changement de pixel filtrée (144), la valeur de changement de pixel filtrée (144) étant utilisée pour calculer le multiplicateur d'intensité (146).

10. Procédé selon la revendication 8 ou 9, dans lequel la valeur de changement de disparité (158) représente une différence entre une disparité proposée d'un pixel pour la carte de profondeur actuelle (122a) et une disparité du pixel pour la carte de profondeur précédente (122b).

11. Procédé selon l'une quelconque des revendications 8 à 10, comprenant en outre :
le calcul d'un coût de mise en correspondance maximal pouvant être produit lors de l'évaluation d'hypothèse de plan ; et
le calcul de la pénalité de stabilité (128) sur la base d'un produit du coût de mise en correspondance maximal, du multiplicateur d'intensité (146) et du multiplicateur de disparité (164).

12. Procédé selon l'une quelconque des revendications 8 à 11, comprenant en outre :
le calcul d'un multiplicateur d'intensité (146) à l'aide d'une fonction d'intensité entrée avec la valeur de changement de pixel (142) ; et
le calcul du multiplicateur de disparité (164) à l'aide d'une fonction de disparité entrée avec la valeur de changement de pixel (142), la fonction de disparité étant différente de la fonction d'intensité.

13. Procédé selon l'une quelconque des revendications 8 à 12, comprenant en outre :
le calcul du coût de mise en correspondance sur la base de distances de Hamming entre les descripteurs ; et
le filtrage du coût de mise en correspondance à l'aide d'un filtre sensible aux bords (196), dans lequel le coût de mise en correspondance filtré est mis à jour avec la pénalité de stabilité (128) .

14. Support non transitoire lisible par ordinateur (118) stockant des instructions exécutables qui, lorsqu'elles sont exécutées par au moins un processeur (116), sont configurées pour amener l'au moins un processeur (116) à :
recevoir des données d'images stéréo (114) comportant des images de référence (130) capturées à partir d'une caméra de référence (108) et des images secondaires (132) capturées à partir d'une caméra secondaire (110) ;
calculer des descripteurs sur la base des images de référence (130) et des images secondaires (132) ;
calculer une pénalité de stabilité (128) sur la base d'informations de changement de pixel et d'informations de changement de disparité ; et
évaluer une pluralité d'hypothèses de plan pour un groupe de pixels à l'aide des descripteurs, notamment :
calculer le coût de mise en correspondance entre les descripteurs pour chaque hypothèse de plan ;
mettre à jour le coût de mise en correspondance avec la pénalité de stabilité (128) ; et
sélectionner une hypothèse de plan parmi la pluralité d'hypothèses de plan pour le groupe de pixels sur la base des coûts de mise en correspondance mis à jour,
dans lequel les informations de changement de pixel comportent une valeur de changement de pixel (142) indiquant un changement d'intensité du pixel et les informations de changement de disparité comportent une valeur de changement de disparité (158), les instructions exécutables comportant des instructions qui, lorsqu'elles sont exécutées par l'au moins un processeur (116), amènent l'au moins un processeur (116) à :
calculer un multiplicateur d'intensité (146) à l'aide de la valeur de changement de pixel filtrée (144) ;
calculer un multiplicateur de disparité (164) à l'aide de la valeur de changement de disparité (158) ; et
calculer la pénalité de stabilité (128) à l'aide du multiplicateur d'intensité (146) et du multiplicateur de disparité (164),
dans lequel la valeur de changement de pixel (142) représente une différence entre une valeur de pixel d'un pixel dans une image de référence (130) pour une carte de profondeur actuelle (122a) et une valeur de pixel du pixel dans une image de référence (130) pour une carte de profondeur précédente (122b).

15. Support non transitoire lisible par ordinateur (118) selon la revendication 14, dans lequel les instructions exécutables comportent des instructions qui, lorsqu'elles sont exécutées par l'au moins un processeur (116), amènent l'au moins un processeur (116) à réaliser le procédé selon l'une quelconque des revendications 9 à 13.
